(19) Europäisches Patentamt
European Patent Office
Office européen des brevets

(11) Numéro de publication: 0 233 435
B1

(12) FASCICULE DE BREVET EUROPÉEN

(45) Date de publication du fascicule du brevet: 21.03.90

(51) Int. Cl.⁵: C 08 G 73/12, C 08 F 222/40, C 08 F 216/14

(21) Numéro de dépôt: 86420271.8

(22) Date de dépôt: 05.11.86

(54) **Polymères à groupements imides et procédé de préparation.**

(30) Priorité: 13.11.85 FR 8516970

(43) Date de publication de la demande: 26.08.87 Bulletin 87/35

(45) Mention de la délivrance du brevet: 21.03.90 Bulletin 90/12

(84) Etats contractants désignés: AT BE CH DE ES FR GB IT LI LU NL SE

(56) Documents cité: FR-A-2 094 607

(73) Titulaire: RHONE-POULENC CHIMIE
25, quai Paul Doumer
F-92408 Courbevoie Cédex (FR)

(72) Inventeur: Dien, René
39 Avenue Gilbert Fabre
F-69390 Millery (FR)
Inventeur: Rakoutz, Michel

décédé (FR)

(74) Mandataire: Trolliet, Maurice
RHONE-POULENC INTERSERVICES Service Brevets Chimie Centre de Recherches de Saint-Fons B.P. 62
F-69192 Saint-Fons Cédex (FR)

EP 0 233 435 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dipposition (Art. 99(1) Convention sur le brevet européen).

LIBERGRAF, STOCKHOLM 1990

**Description**

La présente invention a pour objets de nouveaux polymères thermostables dont l'obtention met en jeu des bis-imides.

On a déja décrit des polymères obtenus par réaction entre un N,N'-bis-imide d'acide dicarboxylique insaturé tel que par exemple un N,N'-bis-maléimide avec une diamine biprimaire [brevet français n° 1 555 564]. Les quantités de N,N'-bis-imide et de diamine sont choisies de façon que le rapport:

$$\frac{\text{nombre de moles de bis-imide}}{\text{nombre de moles de diamine}}$$

soit au moins égal à 1; par ailleurs on préfère généralement qu'il soit inférieur à 50. On obtient des résines thermostables qui résistent remarquablement aux contraintes thermiques sévères.

Il est également indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploi d'une solution.

Finalement, il est mentionné que pour de nombreux emplois, il est avantageux d'opérer en deux temps; dans un premier stade, on prépare un prépolymère par chauffage du mélange intime des deux réactifs à une température de l'ordre de 100 à 250°C. Le prépolymère obtenu peut être utilisé à l'état de solution, de suspension, de poudre ou bien être conformé encore par site coulée à chaud. Dans un second stade, on peut provoquer le durcissement du prépolymère par chauffage jusqu'à des températures de l'ordre de 350°C, éventuellement sous pression.

La présente invention concerne de nouveaux polymères à groupements imides caractérisés en ce qu'ils comprennent le produit de réaction entre:

(a) un N,N'-bis-imide de formule:

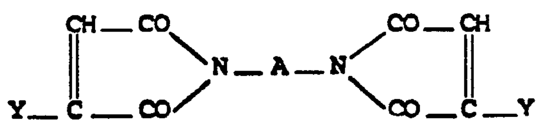

(I)

dans laquelle:

- le symbole Y représente H, $CH_3$ ou Cl
- le symbole A représente un radical divalent choisi dans le groupe constitué par les radicaux: cyclohexylènes; phénylènes; méthyl-4 phénylène-1,3; méthyl-2 phénylène-1,3; méthyl-5 phénylène-1,3; diéthyl-2,5 méthyl-3 phénylène-1,4; et les radicaux de formule:

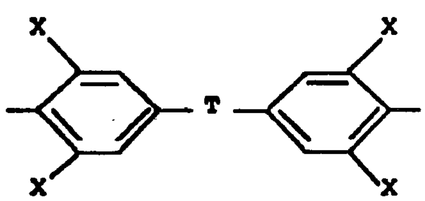

dans laquelle T représente un lien valentiel simple ou un groupement:

$-CH_2-$; 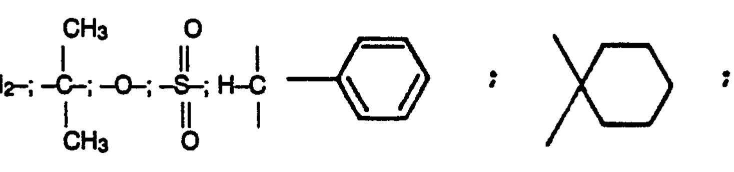

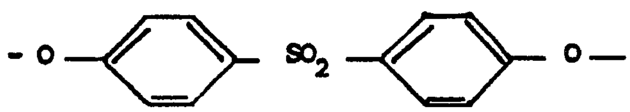

et X représente un atome d'hydrogène, un radical méthyle, éthyle ou isopropyle;

(b) une diamine biprimaire de formule:

$H_2N–B–NH_2$ (II)

dans laquelle le symbole B représente l'un des radicaux divalents que représente le symbole A, les symboles A et B contenus dans un même polymère pouvant être identiques ou différents entre eux et

(c) un monomère insaturé copolymérisable de formule:

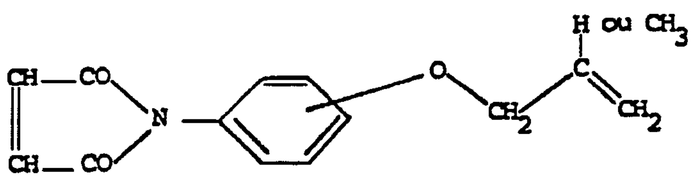

(III)

dans laquelle le radical allyloxy ou méthallyloxy est en position ortho, méta ou para par rapport à l'atome de carbone du cycle benzénique relié à l'azote.

A titre d'exemples spécifiques de bis-imides de formule (I), on peut citer en particulier:

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N'-4,4'-diphénylméthane-bis-maléimide.

A titre d'exemples spécifiques de diamines de formule (II), on peut citer en particulier:

- la paraphénylène diamine,
- la métaphénylène diamine,
- le diamino-4,4'diphénylméthane,
- le bis (amino-4 phényl)-2,2 propane,
- la benzidine,
- l'oxyde de bis-(amino-4 phényl),
- la diamino-4,4' diphénylsulfone.

On utilise de préférence pour la mise en oeuvre de la présente invention, le diamino-4,4' diphénylméthane.

En ce qui concerne le monomère insaturé copolymérisable (c) de formule (III), on utilise les composés suivants:

- le N-(allyloxy-2 phényl) maléimide,
- le N-(allyloxy-3 phényl) maléimide,
- le N-(allyloxy-4 phényl maléimide
- le N-(méthallyloxy-2 phényl) maléimide,

- le N-(méthallyloxy-3 phényl) maléimide,
- le N-(méthallyloxy-4 phényl) maléimide,

Les maléimides de formule (III) sont des produits nouveaux qui peuvent être notamment préparés à partir des aminophénols (ortho, méta ou para), selon la réaction de Claisen.

On peut par exemple faire réagir l'aminophénol, dont on a péalablement bloqué la fonction amine par réaction avec l'anhydride acétique pour former l'acétamidophénol, avec selon le cas un halogénure allyle (le plus souvent le bromure) ou de méthallyle en solution dans acétone et en présence de carbonate dipotassique. La fonction amine est suite régénérée par hydrolyse.

On prépare ensuite de manière classique le maléimide correspondant en faisant réagir en solution l'allyloxyaniline ou la méthallyloxyaniline obtenue précédemment avec l'anhydride maléique, en présence d'anhydride acétique, de triéthylamine et d'un sel de nickel (acétate de nickel en particulier).

On obtient ainsi le N-(allyloxyphényl)-maléimide ou le N-méthallyloxyphényl)-maléimide.

Le N-(allyloxy-4 phényl)maléimide est un solide de couleur jaune moutarde ayant un point de fusion de 103°C environ.

L'analyse RMN est en accord avec la structure suivante:

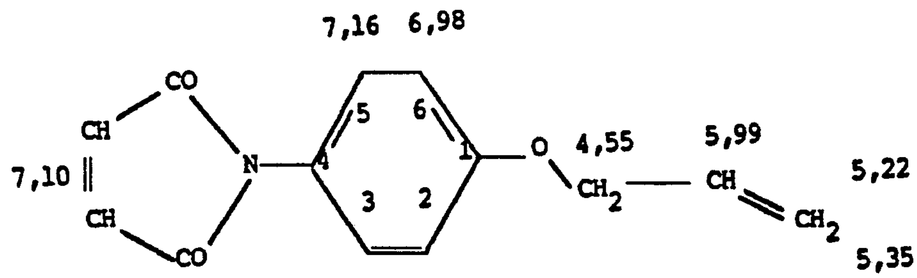

RMN 1H; solvant: DMSO d6; référence: hexaméthyldisiloxane (HMDS)

δ 7,16 (2H, m): H 3,5;
δ 7,10 (2H, s): maléimido;
δ 6,98 (2H, m): H 2,6;
δ 5,99 (1H, m): -CH=;
δ 5,35 et 5,22 (2H, dd): $=CH_2$;
δ 4,55 (2H, d): OCH2.

Le N-(allyloxy-3 phényl)maléimide est un liquide jaune orange visqueux, qui cristallise lentement à température ambiante et qui bout à 150°C environ sous une pression 20 Pa.

L'analyse RMN est en accord avec la structure suivante:

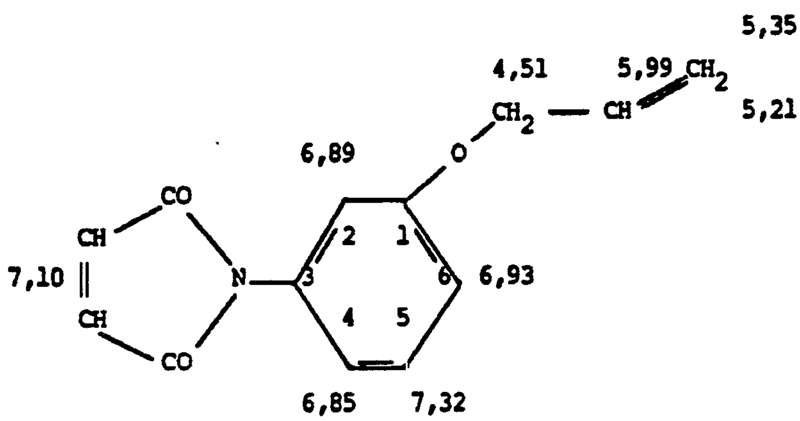

RMN 1H; solvant: DMSO d6; référence: HMDS

δ 6,85, 6,89 et 6,93 (3H, m): H4, H2 et H6;
δ 7,10 (2H, s): maléimido;
δ 7,32 (1H, t): H5;

δ 5,99 (1H,m): -CH=;
δ 5,35 et 5,21 (2H, dd): - CH2;
δ 4,51 (2H, d): $OCH_2$.

Le N-(allyloxy-2 phényl)maléimide est un solide cristallisé jaune clair, ayant un point de fusion d'environ 82°C et un point d'ébullition de 148°C à 155°C sous une pression de 20 Pa.

L'analyse RMN est en accord avec la structure suivante:

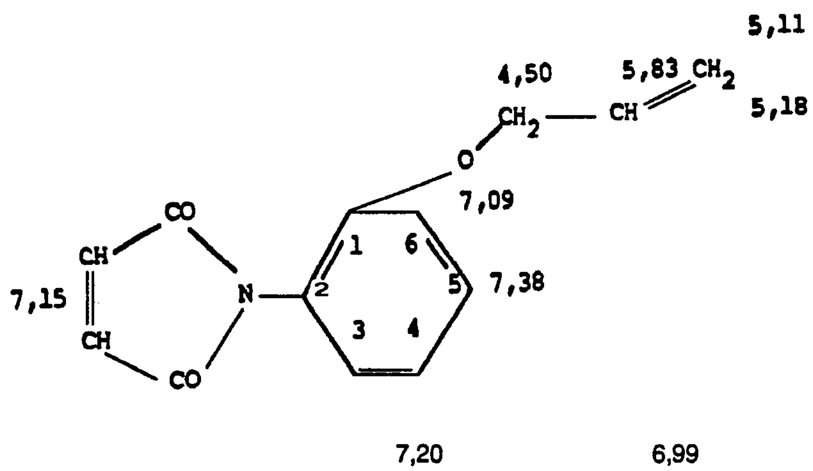

RMN 1H; solvant: DMSO d6; référence: HMDS
δ 7,38 (1H, dt): H5;
δ 7,20 (1H, dd): H3;
δ 7,15 (2H, s): maléimido;
δ 7,09 (1H, dd) H6;
δ 6,99 (1H, dt): H4;
δ 5,83 (1H, m): -CH=;
δ 5,18 et 5,11 (2H, dd): $=CH_2$;
δ 4,50 (2H, d) $OCH_2$.

Le N-(méthallyloxy-4 phényl) maléimide est un solide de couleur beige ayant un point de fusion de 64°C.

L'analyse RMN est en accord avec la structure suivante:

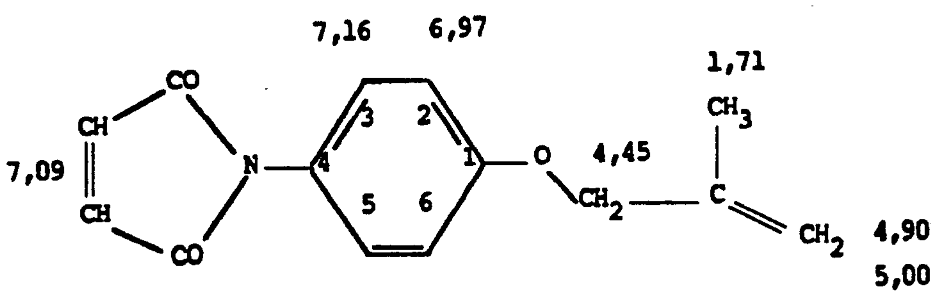

RMN 1H; solvant: DMSO d6; référence: HMDS
δ 7,16 (2H, d): H 3,5;
δ 7,09 (2H, s): maléimido;
δ 6,97 (2H, d): H 2,6;
δ 4,90 et 5,00 (1H, s): $CH_2$=;
δ 4,45 (2H, s): $OCH_2$;
δ 1,71 (3H, s): $CH_3$.

Le N-(méthallyloxy-3 phényl) maléimide est un solide de couleur beige ayant un point de fusion de 39°C.

L'analyse RMN est en accord avec la structure suivante:

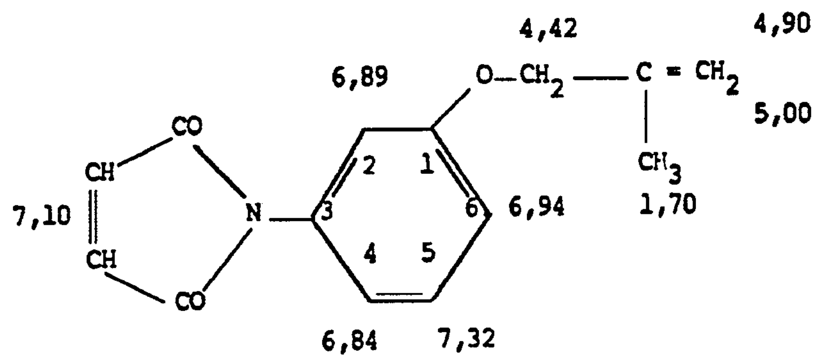

RNN 1H; solvant: DMSO d6; référence: HMDS
δ 7,32 (1H, t): H5;
δ 7,10 (2H, s): maléimido;
δ 6,94 (1H, d): H6;
δ 6,89 (1H, s): H2;
δ 6,84 (1H, d): H4;
δ 4,90 et 5,00 (1H,1): $CH_2$ =;
δ 4,42 (2H, s): $OCH_2$;
δ 1,70 (3H,s): $CH_3$.

Le N(méthallyloxy-2 phényl) maléimide est un solide de couleur beige ayant un point de fusion de 96°C.
L'analyse RMN est en accord avec la structure suivante:

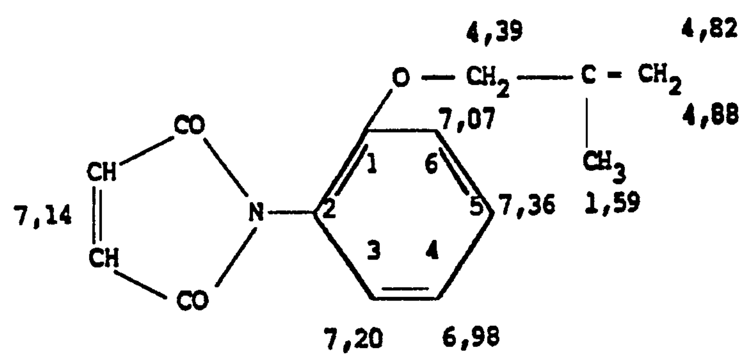

RMN 1H solvant: DMSO d6; référence: HMDS
δ 7,36 (1H, t): H5;
δ 7,20 (1H, d): H3;
δ 7,14 (2H, s): maléimido;
δ 7,07 (1H, d): H6;
δ 6,98 (1H, t): H4;
δ 4,82 et 4,88 (1H, s): $CH_2$=;
δ 4,39 (2H, s): $OCH_2$;
δ 1,59 (3H, s): $CH_3$..

Pour la préparation des polymères selon la présente invention, il doit être entendu que l'on peut faire appel aussi à un mélange de plusieurs bis-imides de formule (I) ainsi qu'à un mélange de plusieurs diamines de formule (II). De même, par le terme de monomère insaturé copolymérisable de formule (III), on peut également désigner des mélanges de plusieurs isomères ortho, méta et/ou para de type allyloxy et/ou méthallyloxy.

Vis-à-vis des polymères obtenus, selon le brevet français n° 1 555 564, par chauffage d'un N,N'-bis-imide et d'une diamine, l'addition d'un monomère insaturé copolymérisable tel que (c):

– en utilisant par ailleurs des proportions de réactifs déterminées notamment de manière à ce que le rapport $r_1$:

$$\frac{\text{nombre total de mole de bis-imide (a) et de monomère (c)}}{\text{nombre de moles de diamine (b)}}$$

soit égal au rapport $r_2$:

$$\frac{\text{nombre de moles de bis-imide}}{\text{nombre de moles de diamine}}$$

utilisé pour confectionner le polymère bis-imide/diamine pris en comparaison,

– permet d'obtenir de façon inattendue des polymères thermodurcissables qui d'une part présentent une durée de vie en pot [en général il s'agit du temps au bout duquel la viscosité du polymère sous forme de solution, a doublé] qui est augmentée et d'autre part se signalent par une teneur en diamine bi-primaire libre qui est nettement abaissée. L'augmentation de la durée de vie en pot est un avantage qui facilite la mise en oeuvre du polymère thermodurcissable et permet d'obtenir des objets moulés bien homogènes, donc bien reproductibles. L'abaissement de la teneur en diamine libre est également très appréciable car il s'agit là de composés dont certains peuvent présenter une certaine toxicité.

Les quantités de N,N'-bis-imide(s) (a), de diamine(s) (b) et de monomère(s) (c) sont choisies de façon à ce que:

– d'une part, le rapport $r_1$:

$$\frac{\text{nombre total de moles de bis-imide(s) (a) et de monomère(s) (c)}}{\text{nombre de moles de diamine(s) (b)}}$$

se situe dans l'intervalle allant de 1,2/1 à 10/1 et de préférence allant de 2/1 à 5/1,

– et d'autre part, le nombre de groupements imides apportés par le ou les monomère(s) (c) représente jusqu'à 50 du nombre total de groupements imides apportés par les réactifs (a) + (c) et de préférence se situe dans l'intervalle allant de 10 à 35 %.

Les polymères selon l'invention peuvent être préparés par chauffage du ou des bis-imide(s) (a), de la ou des diamine(s) (b) et du ou des monomère(s) (c) au moins jusqu'à l'obtention d'un mélange liquide homogène. La température peut varier en fonction de l'état physique des composés en présence mais elle se situe généralement entre 50°C et 250°C. Il est avantageux de maintenir les composés de départ dans un état de mélange intime avant et pendant le chauffage. Selon les caractéristiques physiques des ingrédients, cette mesure peut consister à appliquer les techniques usuelles pour le mélange de solides finement divisés ou bien à effectuer une suspension d'une partie des ingrédients dans un ou plusieurs autres ingrédients à l'état liquide.

La préparation des polymères selon l'invention peut aussi être effectuée par chauffage du mélange des réactifs au sein d'un diluant organique qui est liquide dans une partie au moins de l'intervalle 50°C - 250°C. Parmi ces diluants, on peut mentionner en particulier des hydrocarbures aromatiques comme les xylènes et le toluène, des hydrocarbures halogénés les chlorobenzènes, des éthers comme le dioxanne, le tétrahydrofuranne et l'oxyde de dibutyle le diméthylformamide, le diméthylsulfoxyde, la N-méthylpyrrolidone, le méthylglycol et la méthyl-éthylcétone. Les solutions ou suspensions de polymères peuvent être utilisées telles quelles pour de nombreux emplois; on peut également isoler les polymères, par exemple par filtration éventuellement après précipitation au moyen d'un diluant organique miscible avec le solvant utilisé. Dans ce contexte, on peut utiliser avantageusement un hydocarbure dont le point d'ébullition ne dépasse pas notablement 120°C.

Il doit être compris que les propriétés des polymères selon l'invention peuvent varier dans une large mesure en fonction notamment de la nature exacte du réactif imide (a), du réactif aminé (b) et du réactif insaturé (c), des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les solvants cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200°C [en général ce point de ramollissement est compris entre 50° et 150°C]. Ces prépolymères peuvent être obtenus en masse en chauffant le mélange des réactifs jusqu'à l'obtention d'un produit homogène ou pâteux à une température généralement située entre 50° et 180°C pendant une durée qui peut aller de quelques minutes à quelques heures, cette durée étant d'autant plus brève que la température adoptée est plus élevée.

Il faut noter que ces prépolymères (P) peuvent également être obtenus en formant, à partir du ou des bis-imide(s) (a) et de la ou des diamine(s) (b), un prépolymère (PP) qui est ensuite mis à réagir avec le ou les monomère(s) (c). On peut encore préparer au préalable un prépolymère (P'P') en chauffant le mélange de diamine(s) (b) et de monomère(s) (c), puis en le faisant réagir avec le ou les bis-imide(s) (a) pour obtenir le prépolymère (P). Les conditions de température et de durée utilisées pour la préparation des prépolymères (PP) ou (P'P') et pour leur transformation en prépolymères (P) son celles indiquées ci-avant à propos de la préparation des prépolymères (P) par mélange direct des réactifs (a), (b), et (c).

L'es prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300°C, généralement comprises entre 150° et 250°C; une mise en forme complémentaire peut être effectuée pendant le durcissement, éventuellement sous vide ou sous une pression super-atmosphérique, ces opérations pouvant également être consécutives. Le durcissement peut être effectué en présence d'un initiateur de polymérisation radicalaire tel le péroxyde de lauroyle, l'azobisisobutyronitrile ou d'un catalyseur de polymérisation anionique tel que le diazabicyclooctane.

On ne sort pas du cadre de l'invention si l'on prépare des polymères durcis selon l'invention en utilisant un mélange intime de prépolymère (PP) et de monomère(s) (c) ou un mélange intime de prépolymère (P'P') et de bis-imide(s) (a) que l'on chauffe en masse dans les conditions décrites précédemment.

La préparation des polymères selon l'invention peut être effectuée en présence d'un catalyseur choisi dans le groupe des mono- ou polyacides oxygénés d'origine minérale ou organique dont l'une au moins des fonctions acides possède une constante d'ionisation dans l'eau à 25°C, pka, inférieure à 5; on peut opérer également en présence d'un mélange de deux ou de plus de deux de ces acides. Il peut s'agir avantageusement d'acides mono- ou polycarboxyliques, ceux-ci pouvant être de structure simple ou posséder des groupements qui ne perturbent pas la réaction entre le bis-imide (a), la diamine (b) et le monomère (c); comme acide, on mentionnera par exemple:

- l'acide acétique,
- l'acide monochloroacétique,
- l'acide dichloroacétique,
- l'acide fumarique,
- l'acide trimellique,
- l'acide salicylique,
- l'acide phtalique (ortho, méta ou para)
- l'acide benzènesulfonique,
- l'acide para-toluènesulfonique,
- l'acide méthanesulfonique.

La quantité de catalyseur mise en oeuvre, quand on choisit d'en utliser un, représente généralement de 0,1 à 5 % par rapport au poids total des réactifs (a) + (b) + (c) engagés.

Quand la préparation des polymères selon l'invention se fait par chauffage direct des réactifs (a), (b), et (c) pour conduire soit à un polymère durci, soit à un prépolymère (P), le catalyseur est introduit généralement à côté des réactifs précités de préférence avant de commencer le chauffage.

Quand la préparation des polymères selon l'invention se fait en formant dans un premier temps un prépolymère (PP) ou (P'P' le catalyseur est introduit généralement dans le milieu de préparation de ces prépolymères (PP) ou (P'P') de préférence avant de commencer le chauffage.

Les polymères selon l'invention intéressent les domaines de l'industrie qui requièrent des matériaux doués de bonnes propriétés mécaniques et électriques ainsi que d'une grande inertie chimique à des températures de 200° à 300°C. A titre d'exemples, ils conviennent pour la fabrication d'isolants en plaques ou tubulaires pour transformateurs électriques, de supports de circuits imprimés, de pignons, de bagues etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On rappellera que pour faire par exemple des objets moulés, il est possible de partir, soit du mélange bis-imide(s) (a) + diamine(s) (b) + monomère(s) (c), soit d'un prépolymère (P). Quand on part directement du mélange des réactifs, on donne à ce mélange la forme de l'objet désiré et on effectue ensuite le durcissement par chauffage. Quand on part du prépolymlère (P), il peut être moulé par simple coulée à chaud où par injection et on provoque ensuite son durcissement par chauffage.

Les polymères d'invention conviennent aussi pour la fabrication de revêtements et d'articles à structure cellulaire.

Les exemples suivants sont donnés à titre illustratif, mais non limitatif.

**Exemple 1**

1. On prépare plusieurs mélanges contenant chacun:
- 6,43 g (0,0179 mole) de N,N'-4,4'-diphénylméthane-bis-maléimide
- 1,97 g (0,0099 mole) de diamino-4,4'diphénylméthane (en abréviation DDM),
- et 1,60 g (0,0069 mole) d'un isomère N-(allyloxyphényl) maléimide [l'isomère ortho ou N-(allyloxy-2 phényl)maléimide sera représenté dans ce qui suit par l'abréviation: ortho-AMP; l'isomère méta ou N-(allyloxy-3 phényl)maléimide sera représenté par l'abréviation: méta-APM; et l'isomère para ou N-(allyloxy-4 phényl)maléimide sera représenté par l'abréviation: para-APM] [le rapport $r_1$ est égal ici à 2,5/1 et le nombre de groupements imides apportés par l'isomère représente 16,2 % du nombre total de groupements imides apportés par les réactifs...].

On fait réagir chacun de ces mélanges dans un tube à essais de diamètre intérieur égal à 1,5 cm et de hauteur égale à 18 cm. Pour ce faire, le tube est plongé dans un bain thermostaté à 130°C ou 160°C pendant des durées allant de 20 minutes à 2 heures 10 minutes en ayant soin d'agiter la masse réactionnelle pendant la période de sa fusion. Au bout du temps de réaction choisi compris dans l'intervalle précité, le tube est sorti du bain thermostaté, puis il est refroidi sous un courant d'eau à 15°C. Le prépolymère solidifié obtenu est récupéré puis broyé sous forme de poudre.

On détermine ensuite sur cette poudre le point de ramollissement du prépolymère (en abréviation PR) qui est représentatif de l'avancement global de la réaction. Pour effectuer cette mesure, on introduit dans un tube en aluminium de diamètre intérieur égal à 4 mm de la poudre sur une hauteur de 16 ± 2 mm. Ce tube est placé verticalement dans un four permettant une montée en température à la vitesse de 25 à 30°C par minute. Un piston de diamètre égal à 3 mm est introduit dans le tube et il possède un poids qui est déterminé de manière à soumettre la poudre à une pression de 70 g/mm$^2$. le point de ramollissement est la température atteinte à l'instant où le piston s'est déplacé librement, du fait de son propre poids, de 5 mm au cours du chauffage de la poudre.

On détermine également la teneur en diamino-4,4' diphénylméthane libre n'ayant pas réagi qui reste dans le prépolymère obtenu. Cette détermination consiste à extraire la diamine libre du prépolymère par l'acétonitrile puis par le tétrahydrofuranne (25 cm$^3$ successivement de chaque solvant pour 0,250 g de prépolymère); le dosage de la diamine dans l'extrait obtenu est réalisé par chromatographie liquide sous pression; les résultats sont donnés en pourcentage de diamine libre par rapport au poids de prépolymère.

Les résultats obtenus sont rassemblés dans le tableau 1 suivant:

**Tableau 1**

| Isomère de l'APM | Température de réaction °C | durée de réaction | PR °C | DDM libre % |
|---|---|---|---|---|
| méta | 130 | 1 h | 82,5 | 1,6 |
| - | - | 1 h 20 mn | 89,5 | 1,2 |
| - | - | 2 h | 100,2 | 0,4 |
| - | 160 | 20 mn | 96,1 | 1,6 |
| - | - | 30 mn | 110,4 | 0,9 |
| ortho | 130 | 1 h | 75 | 3,45 |
| - | - | 1 h 30 mn | 86,5 | 1,8 |
| - | - | 2 h 20 mn | 97,9 | 0,6 |
| - | 160 | 20 mn | 81,6 | 2,9 |
| - | - | 40 mn | 109 | 0,75 |
| para | 130 | 1h | 94,2 | 1,0 |
| - | - | 1 h 10 mn | 97,5 | 0,85 |
| - | - | 1 h 30 mn | 105,6 | 0,3 |
| - | 160 | 12 mn | 88,7 | 1,8 |
| - | - | 20 mn | 116,2 | 0,3 |

2. A titre d'essai comparatif (essai A), on a reproduit les mêmes opérations que celles décrites ci-avant, mais en utilisant cette fois des mélanges de:

- 8,19 g (0,0229 mole) de N,N'-4,4'-diphénylméthane-bis-maléimide
- et 1,81 g (0,0091 mole) de diamino-4,4'-diphénylméthane [le rapport $r_2$ est égal à 2,51/1].

Les mélanges préparés sont mis à réagir à 130°C ou 160°C pendant 10 à 40 minutes. On obtient les résutats suivants:

**Tableau 2**

| Température de réaction °C | durée de réaction | PR °C | DDM libre % |
|---|---|---|---|
| 130 | 20 mn | 81,5 | 5 |
| - | 40 mn | 100,6 | 2,85 |
| 160 | 10 mn | 76,5 | 5,5 |
| - | 14mn | 107,5 | 3,4 |

On voit donc que les prépolymères obtenus selon l'art antérieur présentent pour des PR compris entre 76,5°C et 107,5°C des taux de DDM libre variant de 2,85 % à 5,5 %. En utilisant la technique conforme à la présente invention on peut faire chuter le taux de résiduel à des valeurs de 0,3 % à 1,8 pour des PR de 82,5°C à 109°C.

3. A titre d'essai comparatif encore (essai B), on a reproduit les mêmes opérations que celles décrites ci-avant mais en utilisant cette fois des mélanges de:

- 6,69 g (0,0186 mole) de N,N'-4,4 '-diphénylméthane-bis-maléimide,
- 2,05 g (0,0103 mole) de diamino-4,4'-diphénylméthane,
- et 1,26 g (0,0072 mole) de N-phénylmaléimide [le rapport r est égal $ici_1$ à 2,50/1 et le nombre de groupements imides apportés par le N-phénylmaléimide représente 16,2 % du nombre total de groupements imides apportés par les réactifs].

Les mélanges préparés sont mis à réagir à 130°C ou 160°C pendant 12 minutes à 1 heure 20 minutes. On obtient les résultats suivants:

**Tableau 3**

| Température de réaction C° | durée de réaction | PR °C | DDM libre % |
|---|---|---|---|
| 130 | 1 h | 96,6 | 2,4 |
| - | 1 h 20 mn | 106,5 | 1,5 |
| 160 | 20 mn | 119,2 | 2,5 |
| - | 12 mn | 79,5 | 5,5 |

4. Description de la préparation des trois-isomères N-(allyloxyphényl)maléimide:

**4.1 - Para-APM**

Ce composé a été préparé à partir de l'allyloxy-4 aniline dont un mode d'obtention est décrit dans Journal of American Chemical Society, <u>44</u>, pages 1741 à 1744 (1922).

Dans un réacteur en verre muni d'une agitation centrale, d'un thermomètre et d'un réfrigérant ascendant, maintenu à 50°C sous agitation et dans lequel circule un léger courant d'azote, on introduit simultanément en 20 minutes, à l'aide de deux ampoules de coulée:

- 249 g d'une solution acétonique contenant 149,0 g d'allyloxy-4 aniline;
- 249 g d'une solution acétonique contenant 112,7 g d'anhydride maléique.

La réaction est exothermique et conduit à la formation immédiate d'une suspension jaunâtre.

Lorsque les coulées sont terminées, chaque ampoule est rincée par 10 $cm^3$ d'acétone, qui sont ensuite rajoutés à la masse réactionnelle toujours maintenue sous agitation.

Dans l'ampoule ayant contenu l'anhydride maléique, on charge 163,2 g d'anhydride acétique et dans l'autre ampoule on charge 45,4 g de triéthylamine.

Ces deux composés sont alors coulés en 5 minutes dans le réacteur, puis on ajoute 1,9 $cm^3$ d'une solution aqueuse contenant 0,0528 mole de sulfate de nickel pour 100 $cm^3$ de solution.

Le mélange réactionnel est maintenu à reflux sous agitation pendant 2 h 30 min. La température est ensuite abaissée à 30°C, on rajoute 1349 g d'eau distillée, puis on refroidit le mélange à 15°C sous agitation.

Le précipité jaune foncé est essoré, lavé par 100 $cm^3$ d'un mélange 80/20 en volume acétone/eau préalablement refroidi à 10°C, puis par 100 $cm^3$ d'eau distillée.

On sèche le solide essoré pendant 15 h à 40°C sous pression réduite (30 Pa).

On obtient ainsi 215,5 g d'un produit pulvérulent, de couleur jaune moutarde, ayant un point de fusion de 103°C.

Le spectre RMN est en accord avec la structure du N-(allyloxy-4 phényl)maléimide.

4.2 - **Méta-APM**

On utilise le même appareillage que précédemment et on suit le même mode opératoire.

Le produit de départ est l'allyloxy-3 aniline dont un mode de préparation est décrit dans Chemical Abstracts, 51, 4423 a à g (1957).

Les charges utilisées sont doublées par rapport à celles du paragraphe 4.1:

- 498 g d'une solution acétonique contenant 298,0 g d'allyloxy-3 aniline;
- 498 g d'une solution acétonique contenant 225,4 g d'anhydride maléique;
- rinçage de chaque ampoule de coulée par 20 $cm^3$ d'acétone;
- 326,4 g d'anhydride acétique;
- 90,8 g de triéthylamine;
- 3,8 $cm^3$ de solution aqueuse à 0,0528 mole de sulfate de nickel pour 100 $cm^3$ de solution;
- 2698 g d'eau distillée.

L'addition des 2698 g d'eau distillée au mélange réactionnel conduit à la décantation d'une huile de couleur foncée, que l'on extrait par trois fois 250 $cm^3$ d'acétate d'éthyle. Les couches organiques obtenues sont rassemblées et séchées sur du sulfate de sodium.

Après élimination à sec du solvant sur pression réduite (d'abord sous 3000 Pa environ, puis sous 70 Pa environ), on obtient 464 g d'une huile épaisse très foncée titrant 0,309 double liaison éthylénique pour 100 g.

On prélève 22,77 g de ce produit brut auxquels on ajoute 0,2 g d'hydroquinone. On distille sous 12 Pa, dans un réacteur de 50 $cm^3$ muni d'une colonne Vigreux et d'un séparateur de fractions.

On recueille 14,7 g de fraction passant entre 150°C et 155°C sous 20 Pa.

C'est un liquide visqueux, limpide, jaune-orangé, présentant un spectre de RMN en accord avec la structure N-(allyloxy-3 phényl)maléimide.

4.3 - **Ortho-APM**

Ce composé a été préparé à partir de l'allyloxy-2 aniline dont un mode d'obtention est décrit dans Journal of American Chemical Society, 70, page 593 (1948).

Dans un réacteur en verre muni d'une agitation centrale, d'un thermomètre et d'un réfrigérant ascendant, maintenu à 50°C sous agitation et dans lequel circule un léger courant d'azote, on introduit simultanément en 30 minutes, à l'aide de 2 ampoules de coulée:

- 443 $cm^3$ d'une solution acétonique contenant 298 g d'allyloxy-2 aniline;
- 443 $cm^3$ d'une solution acétonique contenant 235,2 g d'anhydride maléique.

La réaction est exothermique et conduit à la formation immédiate d'une suspension jaunâtre.

Lorsque les coulées sont terminées, chaque ampoule est rincée par 10 $cm^3$ d'acétone, qui sont ensuite rajoutés à la masse réactionnelle toujours maintenue sous agitation.

Dans l'ampoule ayant contenu l'anhydride maléique, on charge 265,2 g d'anhydride acétique, et dans l'autre ampoule, on charge 60,6 g de triéthylamine.

Ces deux composés sont alors coulés en 6 minutes dans le réacteur, puis on ajoute 3,8 $cm^3$ d'une solution aqueuse contenant 0,0528 mole d'acétate de nickel pour 100 $cm^3$ de solution.

Le mélange réactionnel est maintenu à reflux sous agitation pendant 2 h 30 minutes. La température est ensuite abaissée à 30°C, on rajoute 2500 g d'eau distillée, puis on refroidit le mélange à 20°C sous agitation.

Une huile noire décante à la surface de la phase aqueuse. On siphonne la phase aqueuse et on reprend la phase huileuse par 400 $cm^3$ d'acétate d'éthyle. La phase organique est lavée par deux fois 500 $cm^3$ d'eau distillée jusqu'à pH des eaux de lavage égal à 6. La phase organique décantée est séchée sur 150 g de sulfate de sodium anhydre.

Après élimination à sec du solvant sous pression réduite (d'abord sous 3000 Pa environ, puis sous 70 Pa environ), on obtient 450 g d'une huile épaisse très foncée, que l'on traite par 560 $cm^3$ d'alcool éthylique, le mélange est refroidi à 5°C dans de la glace, et l'on filtre. On obtient 416 g d'un précipité beige, humide. On sèche pendant 15 heures à 40°C sous pression réduite (30 Pa) et on obtient 365 g de produit cristallin, beige, ayant un point de fusion de 82°C.

Le spectre RMN est en accord avec la structure du N-(allyloxy-2 phényl)maléimide.

**Exemple 2**

1. On prépare plusieurs mélanges contenant chacun:

- 6,36 g (0,0177 mole) de N,N'-4,4'-diphénylméthane-bis-maléimide
- 1,96 g (0,0099 mole) de diamino-4,4'-diphénylméthane
- et 1,68 g (0,0069 mole) d'un isomère N-(méthallyloxyphényl)maléimide [l'isomère ortho ou N-(méthallyloxy-2 phényl)maléimide sera représenté dans ce qui suit par l'abréviation: ortho-MAPM; l'isomère méta ou N-(méthallyloxy-3 phényl)maléimide sera représenté par l'abréviation: méta-MAPM et l'isomère para ou N-(méthallyloxy-4 phényl )maléimide sera représenté par l'abréviation: para-MAPM] [le rapport $r_1$ est égal ici à 2,48/1 et le nombre de groupements imides apportés par l'isomère MAPM représente 16,3 % du nombre total de groupements imides apportés par les réactifs].

On fait réagir ces mélanges dans un tube à essais selon la manière indiquée à l'exemple 1. Les résultats obtenus sont rassemblés dans le tableau suivant:

**Tableau 4**

| Isomère du MAPM | Température de réaction °C | durée de réaction | PR °C | DDM libre % |
|---|---|---|---|---|
| méta | 130 | 1 h | 94,2 | 0,5 |
| - | - | 2 h | 111,9 | 0,05 |
| - | 160 | 20 mn | 101,4 | 0,3 |
| - | - | 38 mn | 127,9 | 0,01 |
| ortho | 130 | 1 h | 78,5 | 1,5 |
| - | - | 1 h 30 mn | 89,7 | 0,85 |
| - | - | 2 h | 98,3 | 0,40 |
| - | 160 | 20 mn | 78,2 | 2,15 |
| - | - | 45 mn | 109 | 0,30 |
| para | 130 | 1 h | 98,6 | 0,75 |
| - | - | 1 h 30 mn | 108,1 | 0,25 |
| - | 160 | 20 mn | 103,6 | 0,55 |

2. Description de la préparation des trois isomères N-(méthallyloxyphényl)maléimide:

2.1 **PARA-MAPM**

Ce composé a été préparé à partir de la méthallyloxy-4 aniline.

2.1.1. **Méthallyloxy-4 aniline:**

Ce composé a été préparé à partir du para-méthallyloxyacétamido benzène. Ce dernier a été obtenu par analogie à la méthode de préparation de l'ortho-acétamidophényl allyl éther décrite dans Journal of American Chemical Society, 70, page 593 (1948), en remplaçant toutefois le bromure d'allyle par le chlorure de méthallyle, et en opérant en présence d'une quantité catalytique d'iodure de potassium (10 % molaire par rapport au chlorure de méthallyle).

Dans un réacteur en verre muni d'une agitation centrale, d'un thermomètre et d'un réfrigérant ascendant, on introduit:

- 205 g de para-méthallyloxyacétamidobenzène
- 400 ml de soude éthanolique 5N on homogénéise, et on ajoute:
- 13,6 g d'imidazole, soit 20 % molaire par rapport au para-méthallyloxyacétamido-benzène.

Le mélange réactionnel est maintenu au reflux, sous agitation, pendant 3 heures.

Le mélange réactionnel est refroidi à 20°C.

On élimine l'éthanol sous pression réduite (70 Pa. environ).

On ajoute dans la masse réactionnelle 250 $cm^3$ d'acétate d'éthyle, et on lave par deux fois 250 $cm^3$ d'eau distillée pour arriver à pH = 7 dans les eaux de lavage.

On élimine l'acétate d'éthyle de la phase organique sous pression réduite (70 Pa environ) et on obtient 165,5 g de produit brut.

On obtient 135,4 g de produit purifié par distillation, à 113°C sous 0,05 mmHg.

Le spectre RMN est en accord avec la structure de la méthallyloxy-4 aniline.

2.1.2. **Para-MAPM:**

Dans un réacteur en verre muni d'une agitation centrale, d'un thermomètre et d'un réfrigérant ascendant, maintenu à

50°C sous agitation et dans lequel circule un léger courant d'azote, on introduit simultanément, en 15 minutes à l'aide de 2 ampoules de coulée:

- 52 $cm^3$ d'une solution acétonique, contenant 32,6 g de méthallyloxy-4 aniline,
- 52 $cm^3$ d'une solution acétonique, contenant 22,5 g d'anhydride maléique.

La réaction est exothermique et conduit à la formation immédiate d'une suspension jaunâtre.

Lorsque les coulées sont terminées, chaque ampoule est rincée par 10 $cm^3$ d'acétone, qui sont ensuite rajoutés à la masse réactionnelle toujours maintenue sous agitation.

Dans l'ampoule de coulée ayant contenu l'anhydride maléique, on charge 26,5 g d'anhydride acétique et dans l'autre ampoule, on charge 6,1 g de triéthylamine.

Ces deux composés sont alors coulés en 5 minutes dans le réacteur, puis on ajoute 0,4 $cm^3$ d'une solution aqueuse contenant 0,0528 mole d'acétate de nickel pour 100 $cm^3$ de solution.

Le mélange réactionnel est maintenu à reflux sous agitation pendant 2 heures 30 minutes. La température est ensuite abaissée à 20°C.

Le mélange réactionnel est précipité par coulée lente dans 500 $cm^3$ d'eau glacée, sous violente agitation.

Le précipité est filtré, relavé à l'eau distillée refroidie, et séché pendant 15 heures à 40°C sous pression réduite (30 Pa). On obtient 39,4 g de précipité beige, ayant un point de fusion de 64°C.

Le spectre est en accord avec la structure du N-(méthallyloxy-4 phényl)maléimide.

2.2. **META-MAPM**

Ce composé a été préparé à partir de la méthallyloxy-3 aniline.

2.2.1. **Méthallyloxy-3 aniline:**

Le produit de départ est le méta-méthallyloxyacétamidobenzène, dont les conditions d'obtention sont les mêmes que celles décrites dans le paragraphe 2.1.1. pour le para-méthallyloxyacétamidobenzène.

Dans un réacteur en verre muni d'une agitation centrale, d'un thermomètre et d'un réfrigérant ascendant, on introduit:

- 205 g de méta-méthallyloxyacétamidobenzène
- 400 ml de soude éthanolique 5N

on homogénéise, et on ajoute:

- 13,6 g d'imidazole, soit 20 % molaire.

Le mélange réactionnel est maintenu au reflux, sous agitation, pendant 3 heures.

Le mélange réactionnel est refroidi à 20°C.

On élimine l'éthanol sous pression réduite (70 Pa. environ).

On ajoute dans la masse réactionnelle 250 $cm^3$ d'acétate d'éthyle, et on lave par deux fois 250 $cm^3$ d'eau distillée, pour arriver à pH = 7 dans les eaux de lavage.

On élimine l'acétate d'éthyle de la phase organique sous pression réduite (70 Pa environ) et on obtient 144 g de produit brut.

On obtient 124 g de produit purifié par distillation, à 85°C sous 0,05 mmHg.

Le spectre RMN est en accord avec la structure de la méthallyloxy-3 aniline.

2.2.2. **Méta-MAPM:**

Dans un réacteur en verre muni d'une agitation centrale, d'un thermomètre et d'un réfrigérant ascendant maintenu à 50°C sous agitation et dans lequel circule un léger courant d'azote, on introduit simultanément en 20 minutes à l'aide de 2 ampoules de coulée:

- 105 $cm^3$ d'une solution acétonique, contenant 65,2 g de méthallyloxy-3 aniline,
- 105 $cm^3$ d'une solution acétonique, contenant 45,0 g d'anhydride maléique.

La réaction est exothermique et conduit à la formation immédiate d'une suspension jaunâtre.

Lorsque les coulées sont terminées, chaque ampoule est rincée par 10 $cm^3$ d'acétone, qui sont ensuite rajoutés à la masse réactionnelle toujours maintenue sous agitation.

Dans l'ampoule de coulée ayant contenu l'anhydride maléique, on charge 53,0 g d'anhydride acétique et dans l'autre ampoule, on charge 12,2 g de triéthylamine.

Ces deux composés sont alors coulés en 5 minutes dans le réacteur, puis on ajoute 0,8 $cm^3$ d'une solution aqueuse contenant 0,0528 mole d'acétate de nickel pour 100 $cm^3$ de solution.

Le mélange réactionnel est maintenu à reflux sous agitation pendant 2 heures 30 minutes. La température

est alors abaissée à 20°C.

Le mélange réactionnel est précipité dans 500 $cm^3$ d'eau distillée à 10°C. L'huile très foncée, visqueuse qui est recueillie est lavée par 250 $cm^3$ de tampon phosphate pH = 7, puis par deux fois 500 $cm^3$ d'eau distillée. Le produit séché sous pression réduite (30 Pa), 15 heures à 30°C est refroidi dans un mélange acétone + carboglace; on obtient ainsi 78 g de solide beige, ayant un point de fusion de 39°C.

Le spectre RMN est en accord avec la structure du N-(méthallyloxy-3 phényl)maléimide.

2.3. **Ortho-MAPM**

Ce composé a été préparé à partir de la méthallyloxy-2 aniline.

2.3.1. **Méthallyloxy-2 aniline**:

Le produit de départ est l'ortho-méthallyloxyacétamidobenzène, dont les conditions d'obtention sont les mêmes que celles décrites dans le paragraphe 2.1.1. pour le paraméthallyloxyacétamidobenzène.

Dans un réacteur en verre muni d'une agitation centrale, d'un thermomètre et d'un réfrigérant ascendant, on introduit:

- 205 g d'ortho-méthallyloxyacétamidobenzène
- 400 ml de soude éthanolique 5N

on homogénéise, et on ajoute:

- 13,6 g d'imidazole, soit 20 % molaire.

Le mélange réactionnel est maintenu au reflux, sous agitation, pendant 3 heures.

Le mélange réactionnel est refroidi à 20 °C.

On élimine l'éthanol sous pression réduite (70 Pa. environ).

On ajoute dans la masse réactionnelle 250 $cm^3$ d'acétate d'éthyle, et on lave par deux fois 250 $cm^3$ d'eau distillée, pour arriver à pH = 7 dans les eaux de lavage.

On élimine l'acétate d'éthyle de la phase organique sous pression réduite (70 Pa environ) et on obtient 168,10 g de produit brut.

On obtient 136,10 g de produit purifié par distillation à 81°C sous 0,05 mmHg.

Le spectre RMN est en accord avec la structure de la méthallyloxy-2 aniline.

2.3.2. **Ortho-MAPM**:

Dans un réacteur en verre muni d'une agitation centrale, d'un thermomètre et d'un réfrigérant ascendant maintenu à 50°C sous agitation et dans lequel circule un léger courant d'azote, on introduit simultanément en 20 minutes à l'aide de 2 ampoules de coulée:

- 105 $cm^3$ d'une solution acétonique, contenant 65,2 g de méthallyloxy-2 aniline,
- 105 $cm^3$ d'une solution acétonique, contenant 45,0 g d'anhydride maléique.

La réaction est exothermique et conduit à la formation immédiate d'une suspension jaunâtre.

Lorsque les coulées sont terminées, chaque ampoule est rincée par 10 $cm^3$ d'acétone, qui sont ensuite rajoutés à la masse réactionnelle toujours maintenue sous agitation.

Dans l'ampoule de coulée ayant contenu l'anhydride maléique, on charge 53,0 g d'anhydride acétique et dans l'autre ampoule, on charge 12,2 g de triéthylamine.

Ces deux composés sont alors coulés en 5 minutes dans le réacteur, puis on ajoute 0,8 $cm^3$ d'une solution aqueuse contenant 0,0528 mole d'acétate de nickel pour 100 $cm^3$ de solution.

Le mélange réactionnel est maintenu à reflux sous agitation pendant 2 heures 30 minutes. La température est alors abaissée à 20°C.

Le mélange réactionnel est précipité dans 500 $cm^3$ d'eau distillée glacée sous forte agitation. Le précipité marron est filtré, relavé à l'eau distillée refroidie, et séché pendant 15 heures à 40°C sous pression réduite (30 Pa), et on obtient 70,0 g de précipité beige, ayant un point de fusion de 96°C.

Le spectre RMN est en accord avec la structure du N-(méthallyloxy-2 phényl) maléimide.

**Exemple 3**

On décrit ici un polymère thermodurcissable (P) selon la présente invention qui est obtenu en formant à partir du bis-imide (a) et de la diamine (b), un prépolymère (PP) qui est ensuite mis à réagir avec le monomère (c).

On fait réagir dans le tube à essais décrit à l'exemple 1:

- 6,43 g (0,0179 mole) de N,N'-4,4'-diphénylméthane-bis-maléimide,
- et 1,97 g (0,0099 mole) de diamino-4,4'-diphénylméthane.

La température de réaction est de 130°C et la durée de réaction de 10 minutes. On ajoute ensuite dans le prépolymère (PP) obtenu 1,60 g (0,0069 mole) de N-(allyloxy-2 phényl)maléimide et on maintient la masse réactionnelle à 130°C pendant 50 autres minutes [le rapport $r_1$ est égal ici à 2,50/1 et le nombre de groupements imides apportés par l'isomère APM représente 16,2 % du nombre total de groupements imides apportés par les réactifs]. Le polymère (P) obtenu est refroidi sous un courant d'eau à 15°C, une fois solidifié, il est broyé sous forme de poudre. Le point de ramollissement est trouvé égal à 79,2°C. Le taux de DDM résiduel est égal à 1,6 %.

**Exemple 4**

On décrit ici un polymère thermodurcissable (P) selon la présente invention qui est obtenu en formant à partir de la diamine (b) et du monomère (c), un prépolymère (P'P') qui est ensuite mis à réagir avec le bis-imide (a).

On fait réagir dans le tube à essais décrit à l'exemple 1:

- 1,97 g (0,0099 mole) de diamino-4,4'diphénylméthane,
- et 1,60 g (0,0069 mole) de N-(allyloxy-3 phényl)maléimide.

La température de réaction est de 130°C et la durée de réaction de 10 minutes. On ajoute ensuite dans le prépolymère (P'P') obtenu 6,43 g (0,0179 mole) de N,N'-4,4'-diphénylméthane-bis-maléimide et on maintient la masse réactionnelle à 130°C pendant 55 autres minutes [le rapport $r_1$ est égal ici à 2,50/1 et le nombre de groupements imides apportés par l'isomère APM représente 16,2 % du nombre total de groupements imides apportés par les réactifs]. Le prépolymère (P) obtenu est refroidi sous un courant d'eau à 15°C; une fois solidifié, il est broyé sous forme de poudre. Le point de ramollissement est trouvé égal à 92,2°C. Le taux de DDM résiduel est égal à 1,5 %.

**Exemple 5**

1. Un réacteur en verre, muni d'un agitateur en acier inoxydable de type ancre et d'une tubulaire latérale permettant le départ des produits volatils, est préchauffé dans un bain à 160°C. On charge successivement:

- 12,8 g (0,0559 mole) de N-(allyloxy-3 phényl)maléimide,
- puis le mélange pulvérulent comprenant 51,44, g (0,1437 mole) de N,N'-4,4'-diphénylméthane-bis-maléimide et 15,76 g (0,0796 mole) de diamino-4,4'diphénylméthane [le rapport $r_1$ est égal à 2,51/1 et le nombre de groupements imides apportés par l'isomère APM représente 16,3 % du nombre total des groupements imides apportés par les réactifs].

Après 8 minutes d'agitation, dont 6 minutes sous une pression réduite de 665 Pa, en opérant à une température de 130°C à 148°C, on obtient un prépolymère limpide. Ce prépolymère est coulé ensuite dans un moule parallélépipédique préchauffé à 150°C afin de préparer des plaques de dimensions 140 x 100 x 4 mm. Les plaques obtenues sont soumises au cycle de cuisson ci-après défini:

- 40 minutes de montée progressive en température de 150°C à 200°C,
- puis 2 heures à 200°C,
- puis 30 minutes de montée en température de 200°C à 250°C,
- puis 16 heures à 250°C,
- puis 1 heure entre 250°C et 100°C (refroidissement progressif).

Après démoulage, les plaques à base de polymère durci sont découpées pour obtenir des éprouvettes de dimensions 30 x 7 x 4 mm sur lesquelles on mesure la résistance (Rf) et le module (Mf) en flexion à 20°C et à 250°C. On effectue aussi les mesures de résistance et module en flexion sur des éprouvettes ayant séjournées 1000 heures à 250°C. Les résultats obtenus sont rassemblés dans le tableau 5 donné ci-après.

2. A titre d'essai comparatif (essai c), on a reproduit les mêmes opérations que celles décrites ci-avant, mais en utilisant cette fois, comme charge, un mélange pulvérulent contenant:

- 65,5 g (0,1829 mole) de N,N'-4,4'-diphénylméthane-bis-maléimide,
- et 14,5 g (0,0732 mole) de diamino-4,4'diphénylméthane [le rapport $r_2$ est égal ici à 2,49/1].

Après 10 minutes d'agitation, dont 9 minutes sous pression réduite de 665 Pa, on obtient un prépolymère homogène et limpide qui est moulé, durci et testé comme indiqué ci-avant. Les résultats obtenus sont rassemblés dans le tableau 5 donné ci-après.

**Exemple 6**

Dans un réacteur en verre, préchauffé dans un bain à 130°C, on charge un mélange pulvérulent contenant:

- 51,44 g (0,1437 mole) de N,N'-4,4'diphénylméthane-bis-maléimide,
- et 15,76 g (0,0796 mole de diamino-4,4'diphénylméthane.

On laisse réag'r 13 Minutes, puis on ajoute 12,8 g (0,0559 mole) de N-(allyloxy-2 phényl)maléimide [le rapport $r_1$ est égal ici à 2,51/1 et le nombre de groupements imides apportés par l'isomère APM représente 16,3 % du nombre total de groupements imides apportés par les réactifs].

Après 12 minutes de chauffage à 130°C dont 4 minutes sous une pression réduite de 400 Pa, on obtient un prépolymère qui est moulé, durci et testé comme indiqué à l'exemple 5. A noter que le cycle de cuisson du prépolymère est le suivant:

- 40 minutes à 130°C,
- puis 20 minutes de montée progressive en température de 130°C à 150°C,
- puis 30 minutes de montée progressive en température de 150°C à 200°C,
- puis 2 heures à 200°C,
- puis 30 minutes de montée progressive en température de 200°C à 250°C,
- puis 16 heures à 250°C,
- puis 1 heure de refroidissement progressif de 250°C à 100°C.

Les résultats obtenus sont rassemblés dans le tableau 5 donné ci-après.

**Exemples 7**

Dans un réacteur en verre, préchauffé à 130°C, on charge:

- 12,8 g (0,0559 mole) de N-(allyloxy-3 phényl)maléimide,
- puis 15,76 g (0,0796 mole) de diamino-4,4'diphénylméthane.

On laisse réagir 11 minutes, puis on ajoute en 3 minutes 51,44 g (0,01437 mole) de N,N'-4,4'diphénylméthane-bis-maléimide [le rapport $r_1$ est égal ici à 2, 51/1 et le nombre de groupements imides apportés par l'isomère APM représente 16,3 % du nombre total de groupements imides apportés par les réactifs].

La température de la masse réactionnelle est portée ensuite à 150°C et on maintient l'agitation pendant 6 minutes dont 4 minutes sous pression réduite de 400 Pa. On obtient ainsi un prépolymère qui est moulé, durci et testé comme indiqué à l'exemple 5. Les résultats obtenus sont rassemblés dans le tableau 5 donné ci-après.

**Tableau 5**

| Vieillissement | Mesures de flexion | | Essai C | Exemple 5 | Exemple 6 | Exemple 7 |
|---|---|---|---|---|---|---|
| 0 | à 20°C | Rf | 227 MPa | 217 MPa | 248 MPa | 230 MPa |
| | | Mf | 3116 MPa | 2774 MPa | 2878 MPa | 2994 MPa |
| | à 250°C | Rf | 93 MPa | 95 MPa | 90 MPa | 90 MPa |
| | | Mf | 1193 MPa | 1840 MPa | 1717 MPa | 1326 MPa |
| 1000 H à 250°C | à 20°C | Rf | 159 MPa | 140 MPa | 137 MPa | 171 MPa |
| | | Mf | 3170 MPa | 3475 MPa | 3440 MPa | 3238 MPa |
| | à 250°C | Rf | 135 MPa | 68,5 MPa | 68 MPa | 100 MPa |
| | | Mf | 2480 MPa | 2600 MPa | 2604 MPa | 2462 MPa |

Rf et Mf: norme ASTM D 790-63 (distance entre appuis: 25,4 mm)

**Exemple 8**

On prépare plusieurs mélanges contenant chacun:

- 5,22 g (0,0146 mole) de N,N'-4,4'-diphénylméthane-bis-maléimide,
- 1,44 g (0,073 mole) de diamino-4,4'diphénylméthane,

- 3,34 g (0,0146 mole) d'un isomère N-(allyloxyphényl) maléimide
- et 0,05 g (0,5 % par rapport au poids des réactifs d'acide paratoluènesulfonique.

[Le rapport $r_1$ est égal ici à 4/1 et le nombre de groupements imides apportés par l'isomère APM représente 33,3 % du nombre total de groupements imides apportés par les réactifs].

Le mode opératoire utilisé est le même que celui décrit ci-avant à l'exemple 1.

Résultats obtenus:

**Tableau 6**

| Isomère de l'APM | Température de réaction °C | durée de réaction | PR °C | DDM libre % |
|---|---|---|---|---|
| méta | 170 | 25 mn | 85,9 | 0,01 |
| para | 170 | 30 mn | 93,2 | 0,002 |

**Exemple 9**

Il s'agit ici d'un exemple du type de celui décrit ci-avant dans l'exemple 4 (voir prépolymère).

On fait réagir dans le tube à essais décrit à l'exemple 1:

- 1,44 (0,0073 mole) de diamino-4,4'diphénylméthane,
- 3,34 (0,0146 mole) de N-(allyloxy-3 phényl) maléimide,
- et 0,05 g d'acide paratoluènesulfonique.

La température de réaction est de 100°C et la durée de réaction de 10 minutes. On ajoute ensuite dans le prépolymère (P'P') obtenu 5,22 g (0,0146 mole) de N,N'-4,4'-diphénylméthane-bis-maléimide et on porte la masse réactionnelle à 170°C en la maintenant ensuite à cette température pendant 63 minutes. [Le rapport $r_1$ est égal ici à 4/1 et le nombre de groupements imides apportés par l'isomère APM représente 33,3 % du nombre total de groupements imides apportés par les réactifs]. Le prépolymère (P) obtenu est refroidi; une fois solidifié, il est broyé sous forme de poudre. Le point de ramollissement est trouvé égal à 99,3°C. Le taux de DDM résiduel est égal à 0,002 %.

**Revendications** pour les Etats Contractants: BE, CH, DE, FR, GB, IT, LI, LU, NL, SE

1. Polymères à groupements imides caractérisés en ce qu'ils comprennent le produit de réaction entre:

(a) au moins un N,N'-bis-imide de formule:

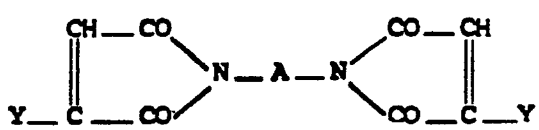

(I)

dans laquelle:

- le symbole Y représente H, $CH_3$ ou Cl
- le symbole A représente un radical divalent choisi dans le groupe constitué par les radicaux: cyclohexylènes; phénylènes; méthyl-4 phénylène-1,3; méthyl-2 phénylène-1,3; méthyl-5 phénylène-1,3; diéthyl-2, 5 méthyl-3 phénylène-1,4; et les radicaux de formule:

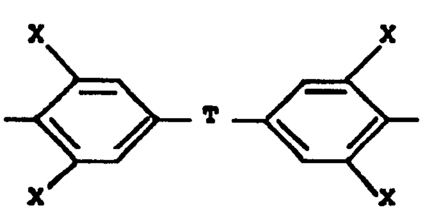

dans laquelle T représente un lien valentiel simple ou un groupement:

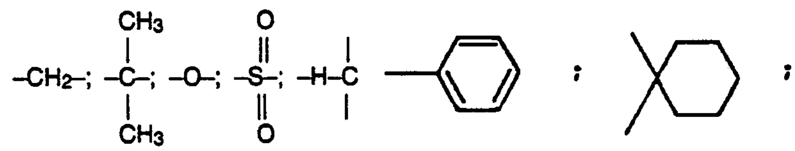

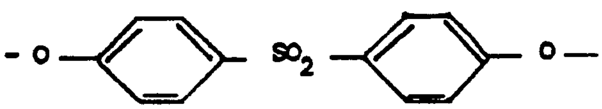

et X représente un atome d'hydrogène, un radical méthyle, éthyle ou isopropyle;

(b) au moins une diamine biprimaire de formule:

$H_2N-B-NH_2$ (II)

dans laquelle le symbole B représente l'un des radicaux divalents que représente le symbole A, les symboles A et B contenus dans un même polymère avant être identiques ou différents entre eux; et
(c) au moins un monomère insaturé copolymérisable de formule:

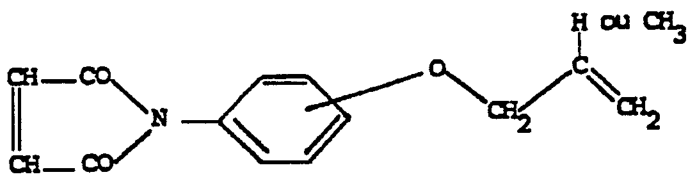

(III)

dans laquelle le radical allyloxy ou méthallyloxy est en position ortho, méta ou para par rapport à l'atome de carbone du cycle benzénique relié à l'azote.

2. Polymères selon la revendication 1, caractérisés en ce que les quantités de N,N'-bis-imide(s) (a), de diamine(s) (b) et de monomère(s) (c) sont choisies de façon à ce que:

- d'une part, le rapport $r_1$:

$$\frac{\text{nombre total de moles de bis-imide(s) (a) et de e(s) (c)}}{\text{nombre de moles de diamine(s) (b)}}$$

se situe dans l'intervalle allant de 1,2/1 à 10/1 et de préférence allant de 2/1 à 5/1,

- et d'autre part, le nombre de groupements imides apportés par le ou les monomère(s) (c) représente jusqu'à 50 % du nombre total de groupements imides apportés par les réactifs (a) + (c) et de préférence se situe dans l'intervalle allant de 10 à 35 %.

3. Polymères selon l'une quelconque des revendications 1 et 2, caractérisés en ce qu'ils se trouvent sous forme de polymères durcis, insolubles dans les solvants usuels et ne présentent pas de ramollissement notable au dessous de la température à laquelle ils commencent à se dégrader.

4. Polymères selon l'une quelconque des revendications 1 et 2, caractérisés en ce qu'ils se trouvent sous forme de prépolymères thermodurcissables (P) solubles dans les solvants organiques polaires et présentent un point de ramollissement à une température inférieure à 200°C.

5. Procédé de préparation de polymères durcis selon les revendications 1, 2 et 3, caractérisé en ce que l'on chauffe directement le mélange des réactifs à une température comprise entre 50° et 250°C.

6. Procédé selon la revendication 5, caractérisé en ce qu'il consiste à chauffer le mélange des réactifs entre 50°C et 180°C pour former dans un premier temps un prépolymère (P), puis à provoquer le durcissement du prépolymère (P)

par chauffage à une température comprise entre 150°C et 250°C.

7. Procédé de préparation de polymères thermodurcissables (P) selon les revendications 1, 2 et 4, caractérisé en ce que l'on chauffe directement le mélange des réactifs à une température comprise entre 50°C et 180°C jusqu'à l'obtention d'un produit homogène liquide ou pâteux.

8. Procédé selon la revendication 6 ou 7, caractérisé en ce qu'il consiste à former, à partir de bis-imide(s) (a) et de diamine(s) (b), un prépolymère (PP), puis à chauffer ce prépolymère (PP) avec le ou les monomère(s) (c) pour obtenir le prépolymère (P).

9. Procédé selon la revendication 6 ou 7, caractérisé en ce qu'il consiste à former, à partir de la ou des diamine(s) (b) et du ou des monomère(s) (c), un prépolymère (P'P'), puis à chauffer ce prépolymère (P'P') avec le ou les bis-imide(s) (a) pour obtenir le prépolymère (P).

10. Procédé selon l'une quelconque des revendications 5 à 7, caractérisé en ce que l'on introduit à côté des réactifs (a), (b), et (c) avant de commencer le chauffage, un catalyseur choisi dans le groupe des mono- ou polyacides oxygénés d'origine minérale ou organique dont l'une au moins des fonctions acides possède une constante d'ionisation dans l'eau à 25°C, pka, inférieure à 5, ledit catalyseur étant utilisé en quantité représentant 0,1 à 5 % par rapport au poids total des réactifs engagés.

11. Procédé selon la revendication 8 ou 9, caractérisé en ce que l'on introduit dans le milieu de préparation du prépolymère (PP) ou (P'P'), avant de commencer le chauffage, un catalyseur dont la nature et la quantité sont celles définies ci-avant dans la revendication 10.

12. Application des polymères selon l'une quelconque des revendications 1 à 4 à la fabrication d'objets moulés, de revêtements, de stratifiés et d'articles à structure cellulaire.

**Revendications** pour l'Etat Contractant: AT

1. Procédé de préparation de polymères à groupements imides se trouvant sous forme de polymères durcis, insolubles dans les solvants usuels et ne présentant pas de ramollissement notable en dessous de la température à laquelle ils commencent à se dégrader, caractérisé par le fait que l'on chauffe directement à une température comprise entre 50°C et 250°C le mélange des réactifs suivants:

(a) au moins un N,N'-bis-imide de formule:

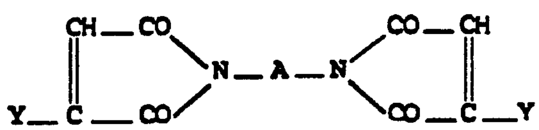

(I)

dans laquelle:

- le symbole Y représente H, $CH_3$ ou Cl
- le symbole A représente un radical divalent choisi dans le groupe constitué par les radicaux: cyclohexylènes; phénylènes; méthyl-4 phénylène-1,3; méthyl-2 phénylène-1,3; méthyl-5 phénylène-1,3; diéthyl-2,5 méthyl-3 phénylène-1,4 et les radicaux de formule:

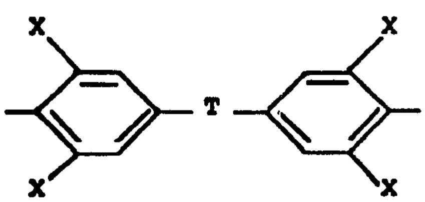

dans laquelle T représente un lien valentiel simple ou un groupement:

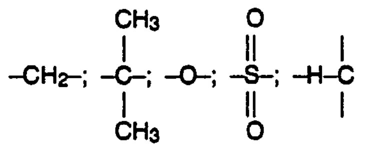 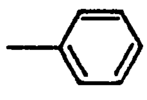 ; 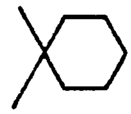 ;

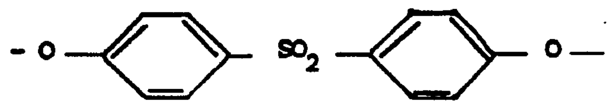

et X représente un atome a d'hydrogène, un radical méthyle, éthyle ou isopropyle;

(b) au moins une diamine biprimaire de formule:

$H_2N\text{–}B\text{–}NH_2$ (II)

dans laquelle le symbole B représente l'un des radicaux divalents que représente le symbole A, les symboles A et B contenus dans un même polymère pouvant être identiques ou différents entre eux; et
(c) au moins un monomère insaturé copolymérisable de formule:

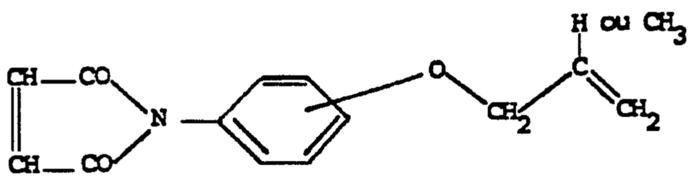 (III)

dans laquelle le radical allyloxy ou méthallyloxy est en position ortho, méta ou para par rapport à l'atome de carbone du cycle benzénique relié à l'azote.

2. Procédé de préparation de polymères à groupements imides se trouvant sous forme de prépolymères thermo durcissables (P) solubles dans les solvants organiques polaires et présentant un point de ramollissement à une température inférieure à 200°C, caractérisé par le fait que l'on chauffe directement le mélange des réactifs (a), (b) et éventuellement (c) définis ci-avant dans la revendication 1 à une température comprise entre 50°C et 180°C jusqu'à l'obtention d'un produit homogène liquide ou pâteux.

3. Procédé selon la revendication 1, caractérisé en ce qu'il consiste à chauffer le mélange des réactifs entre 50°C et 180°C pour former dans un premier temps un prépolymère (P), puis à provoquer le durcissement du prépolymère (P) par chauffage à une température comprise entre 150°C et 250°C.

4. Procédé selon la revendication 2 ou 3, caractérisé en ce qu'il consiste à former, à partir du ou des bis-imide(s) (a) et de diamine(s) (b), un prépolymère (PP), puis à chauffer ce prépolymère (PP) avec le ou les monomère(s) (c) pour obtenir le prépolymère (P).

5. Procédé selon la revendication 2 ou 3, caractérisé en ce qu'il consiste à former, à partir de la ou des diamine(s) (b) et du ou des monomère(s) (c), un prépolymère (P'P'), puis à chauffer ce prépolymère (P'P') avec le ou les bis-imide(s) (a) pour obtenir le prépolymère (P).

6. Procédé selon l'une quelconque des revendications 1 à 5, caractérisé en ce que les quantités de N,N'-bis-imide(s) (a), de diamine(s) (b) et de monomère(s) (c) sont choisies de façon à ce que:

– d'une part, le rapport $r_1$:

$$\frac{\text{nombre total de moles de bis-imide(s) (a) et de monomère(s) (c)}}{\text{nombre de moles de diamine(s) (b)}}$$

se situe dans l'intervalle allant de 1,2/1 à 10/1 et de préférence allant de 2/1 à 5/1,
– et d'autre part, le nombre de groupements imides apportés par le ou les monomère(s) (c) représente jusqu'à 50 % du nombre total de groupements imides apportés par les réactifs (a) + (c) et de préférence se situe dans l'intervalle allant de 10 à 35 %.

7. Procédé selon l'une quelconque des revendications 1 à 3, caractérisé en ce que l'on introduit à côté des réactifs (a), (b) et (c), avant de commencer le chauffage, un catalyseur choisi dans le groupe des mono- ou polyacides oxygénés d'origine minérale ou organique dont l'une au moins des fonctions acides possède une constante d'ionisation dans l'eau à 25°C, pka, inférieure à 5; ledit catalyseur étant utilisé en quantité représentant 0,1 à 5 % par rapport au poids total des réactifs engagés.

8. Procédé selon la revendication 4 ou 5, caractérisé en ce que l'on introduit dans le milieu de préparation du prépolymère (PP) ou (P'P'), avant de commencer le chauffage, un catalyseur dont la nature et la quantité sont celles définies ci-avant dans la revendication 7.

9. Application des polymères préparés selon l'une quelconque des revendications 1 à 8 à la fabrication d'objets moulés, de revêtements, de stratifiés et d'articles à structure cellulaire.

**Reventications** pour l'Etat Contractant: ES

1. Procédé de préparation de polymères à groupements imides se trouvant sous forme de polymères durcis, insolubles dans les solvants usuels et ne présentant pas de ramollissement notable en dessous de la température à laquelle ils commencent à se dégrader, caractérisé par le fait que l'on chauffe directement à une température comprise entre 50°C et 250°C le mélange des réactifs suivants:

(a) au moins un N,N'-bis-imide de formule:

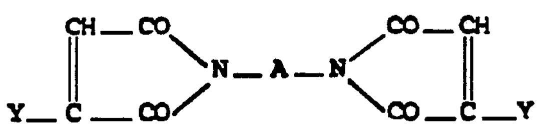

(I)

dans laquelle:

- le symbole Y représente H, $CH_3$ ou Cl
- le symbole A représente un radical divalent choisi dans le groupe constitué par les radicaux: cyclohexylènes; phénylènes; méthyl-4 phénylène-1,3; méthyl-2 phénylène-1,3; méthyl-5 phénylène-1,3; diéthyl-2,5 méthyl-3 phénylène-1,4; et les radicaux de formule:

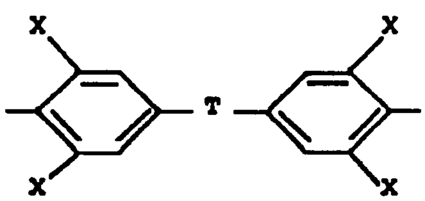

dans laquelle T représente un lien valentiel simple ou un groupement:

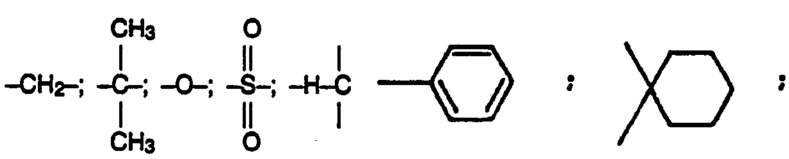

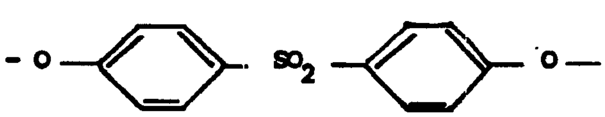

et X représente un atome d'hydrogène, un radical méthyle, éthyle ou isopropyle;

(b) au moins une diamine biprimaire de formule:

$H_2-B-NH_2$ (II)

dans laquelle le symbole B représente l'un des radicaux divalents que représente le symbole A, les symboles A et B contenus dans un même polymère pouvant être identiques ou différents entre eux; et

(c) au moins un monomère insaturé copolymérisable de formule:

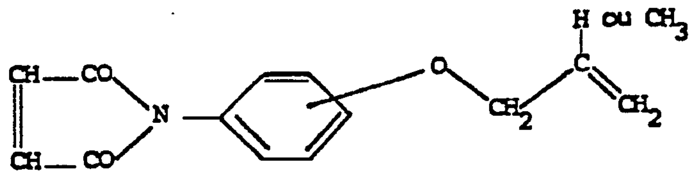

(III)

dans laquelle le radical allyloxy ou méthallyloxy est en position ortho, méta ou para par rapport à l'atome de carbone du cycle benzénique relié à l'azote.

2. Procédé de préparation de polymères à groupements imides se trouvant sous forme de prépolymères thermo durcissables (P) solubles dans les solvants organiques polaires et présentant un point de ramollissement à une température inférieure à 200°C, caractérisé par le fait que l'on chauffe directement le mélange des réactifs (a), (b) et éventuellement (c) définis ci-avant dans la revendication 1 à une température comprise entre 50°C et 180°C jusqu'à l'obtention d'un produit homogène liquide ou pâteux.

3. Procédé selon la revendication 1, caractérisé en ce qu'il consiste à chauffer le mélange des réactifs entre 50°C et 180°C pour former dans un premier temps un prépolymère (P), puis à provoquer le durcissement du prépolymère (P) par chauffage à une température comprise entre 150°C et 250°C.

4. Procédé selon la revendication 2 ou 3, caractérisé en ce qu'il consiste à former, à partir du ou des bis-imide(s) (a) et de diamine(s) (b), un prépolymère (PP), puis à chauffer ce prépolymère (PP) avec le ou les monomère(s) (c) pour obtenir le prépolymère (P).

5. Procédé selon la revendication 2 ou 3, caractérisé en ce qu'il consiste à former, à partir de la ou des diamine(s) (b) et du ou des monomère(s) (c), un prépolymère (P'P'), puis à chauffer ce prépolymère (P'P') avec le ou les bis-imide(s) (a) pour obtenir le prépolymère (P).

6. Procédé selon l'une quelconque des revendications 1 à 5, caractérisé en ce que les quantités de N,N'-bis-imide(s) (a), de diamine(s) (b) et de monomère(s) (c) sont choisies de façon à ce que:

- d'une part, le rapport $r_1$:

$$\frac{\text{nombre total de moles de bis-imide(s) (a) et de monomère(s) (c)}}{\text{nombre de moles de diamine(s) (b)}}$$

se situe dans l'intervalle allant de 1,2/1 à 10/1 et de préférence allant de 2/1 à 5/1,

- et d'autre part, le nombre de groupements imides apportés par le ou les monomère(s) (c) représente jusqu'à 50 % du nombre total de groupements imides apportés par les réactifs (a) + (c) et de préférence se situe dans l'intervalle allant de 10 à 35 %.

7. Procédé selon l'une quelconque des revendications 1 à 3, caractérisé en ce que l'on introduit à côté des réactifs (a), (b) et (c), avant de commencer le chauffage, un catalyseur choisi dans le groupe des mono- ou polyacides oxygénés d'origine minérale ou organique dont l'une au moins des fonctions acides possède une constante d'ionisation dans l'eau à 25°C, C, inférieure à 5; ledit catalyseur étant utilisé en quantité représentant 0,1 à 5 % par rapport au poids total des réactifs engagés.

8. Procédé selon la revendication 4 ou 5, caractérisé en ce que l'on introduit dans le milieu de préparation du prépolymère (PP) ou (P'P'), avant de commencer le chauffage, un catalyseur dont la nature et la quantité sont celles définies ci-avant dans la revendication 7.

9. Application des polymères préparés selon l'une quelconque des revendications 1 à 8 à la fabrication d'objets moulés, de revêtements, de stratifiés et d'articles à structure cellulaire.

**Patentansprüche** für die Vertragsstaaten: BE, CH, DE, FR, GB, IT, LI, LU, NL, SE

1. Polymere mit Imidgruppen, dadurch gekennzeichnet, daß sie umfassen das Reaktionsprodukt zwischen:

a) mindestens einem N,N'-Bis-imid der Formel

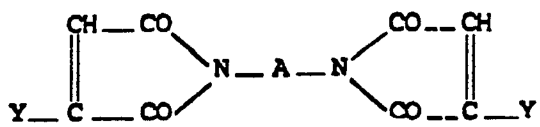

(I)

worin.

- das Symbol Y bedeutet H, $CH_3$ oder Cl
- das Symbol A einen zweiwertigen Rest bedeutet, ausgewählt aus der Gruppe bestehend aus den Resten: Cyclohexylene, Phenylene, 4-Methyl-1,3-phenylen, 2-Methyl-1,3-phenylen, 5-Methyl-1,3-phenylen, 2,5-Diethyl-3-methyl-1,4-phenylen; und den Resten der Formel

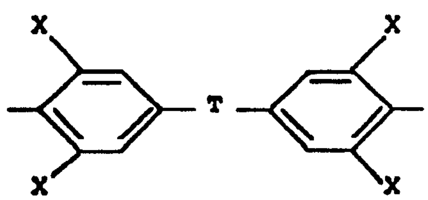

worin T eine einfache Wertigkeitsbindung oder eine Gruppe:

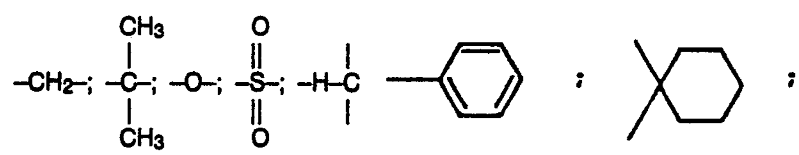

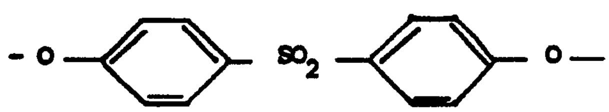

bedeutet und X ein Wasserstoffatom, ein Methyl-, Ethyl- oder Isopropylrest ist;

b) mindestens einem biprimären Diamin der Formel

$H_2N{-}B{-}NH_2$ (II)

worin das Symbol B einen der zweiwertigen Reste, die das Symbol A darstellt, bedeutet, wobei die Symbole A und B, die in ein und demselben Polymeren enthalten sind, identisch oder untereinander verschieden sein können, und

c) mindestens einem ungesättigten, copolymerisierbaren Monomeren der Formel

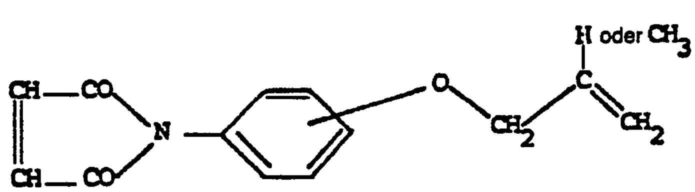

(III)

worin der Allyloxy- oder Methallyloxy-Rest in ortho-, meta- oder para-Stellung in bezug auf das Kohlenstoffatom des Benzolringes, der mit dem Stickstoffatom verbunden ist, steht.

2. Polymere gemäß Anspruch 1, dadurch gekennzeichnet, daß die Mengen an N,N'-Bis-imid(en) (a), Diamin(en) (b) und Monomer(en) (c) derart ausgewählt sind, daß

- einerseits das Verhältnis $r_1$:

$$\frac{\text{Gesamtzahl der Mole Bis-imid(e) (a) und Monomer(e) (c)}}{\text{Anzahl der Mole Diamin(e) (b)}}$$

in dem Intervall von 1,2/1 bis 10/1 und vorzugsweise von 2/1 bis 5/1 liegt

- und andererseits die Zahl der Imidgruppen, die durch das oder die Monomer(en) (c) erbracht werden, bis zu 50 % der Gesamtzahl der Imidgruppen, erbracht durch die Reaktanten (a) + (c) darstellt und vorzugsweise im Intervall von 10 bis 35 % liegt.

3. Polymere gemäß einem der Ansprüche 1 und 2, dadurch gekennzeichnet, daß sie sich in Form von gehärteten, in den üblichen Lösungsmitteln unlöslichen Polymeren befinden und keine merkliche Erweichung unterhalb der Temperatur, bei der sie sich abzubauen beginnen, aufweisen.

4. Polymere gemäß einem der Ansprüche 1 und 2, dadurch gekennzeichnet, daß sie sich in Form von wärmehärtbaren, in den polaren organischen Lösungsmitteln löslichen Prepolymeren (P) und einen Erweichungspunkt bei einer Temperatur unterhalb 200°C aufweisen.

5. Verfahren zur Herstellung von gehärteten Polymeren gemäß den Ansprüchen 1, 2 und 3, dadurch gekennzeichnet, daß man das Gemisch der Reaktanten direkt auf eine Temperatur zwischen 50°C und 250°C erhitzt.

6. Verfahren gemäß Anspruch 5, dadurch gekennzeichnet, daß es darin besteht, das Gemisch der Reaktanten zwischen 50°C und 180°C zu erhitzen, um zunächst ein Prepolymeres (P) zu bilden, und dann die Härtung des Prepolymeren (P) durch Erhitzen auf eine Temperatur zwischen 150°C und 250°C hervorzurufen.

7. Verfahren zur Herstellung der wärmehärtbaren Polymeren (P) gemäß den Ansprüchen 1, 2 und 4, dadurch gekennzeichnet, daß man das Gemisch der Reaktanten direkt auf eine Temperatur zwischen 50°C und 180°C erhitzt, bis zur Erzielung eines flüssigen oder pastösen homogenen Produkts.

8. Verfahren gemäß Anspruch 6 oder 7, dadurch gekennzeichnet, daß es darin besteht, ausgehend von Bis-imid(en) (a) und Diamin(en) (b) ein Prepolymeres (PP) zu bilden, dann dieses Prepolymere (PP) mit dem oder den Monomer(en) (c) zu erhitzen, um das Prepolymer (P) zu erhalten.

9. Verfahren gemäß Anspruch 6 oder 7, dadurch gekennzeichnet, daß es darin besteht, ausgehend von dem oder den Diamin(en) (b) und dem oder den Monomer(en) (c) ein Prepolymeres (P'P') zu bilden, dann dieses Prepolymere (P'P') mit dem oder den Bisimid(en) (a) zu erhitzen, um das Prepolymere (P) zu erhalten.

10. Verfahren gemäß einem der Ansprüche 5 bis 7, dadurch gekennzeichnet, daß man neben den Reaktanten (a), (b) und (c) vor Beginn des Erhitzens einen Katalysator einführt, ausgewählt aus der Gruppe der Mono- oder Polysauerstoffsäuren mineralischen oder organischen Ursprungs, von denen wenigstens eine der Säurefunktionen eine Ionisationskonstante in Wasser bei 25°C, pka, unterhalb von 5 besitzt, wobei dieser Katalysator in einer Menge von 0,1 bis 5 % in bezug auf das Gesamtgewicht der eingesetzten Reaktanten verwendet wird.

11. Verfahren gemäß Anspruch 8 oder 9, dadurch gekennzeichnet, daß man in das Herstellungsmilieu des Prepolymeren (PP) oder (P'P') vor Beginn des Erhitzens einen Katalysator einführt, dessen Natur und Menge diejenigen sind, wie sie vorstehend in Anspruch 10 definiert sind.

12. Verwendung der Polymeren gemäß einem der Ansprüche 1 bis 4 zur Erzeugung von geformten Gegenständen, Überzügen, Schichtstoffen und Erzeugnissen mit Zellstruktur.

**Patentansprüche** für den Vertragsstaat: AT

1. Verfahren zur Herstellung von Polymeren mit Imidgruppen, die sich in Form von gehärteten, in den üblichen Lösungsmitteln unlöslichen Polymeren befinden und keine merkliche Erweichung unterhalb der Temperatur, bei der sie sich abzubauen beginnen, aufweisen, dadurch gekennzeichnet, daß man direkt bei einer Temperatur zwischen 50°C und 250°C das Gemisch der folgenden Reaktanten erhitzt:

(a) mindestens ein N,N'-Bis-imid der Formel

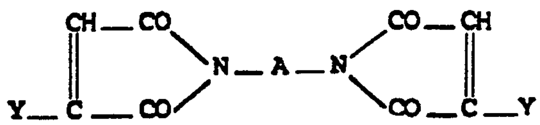

(I)

worin.

- das Symbol Y bedeutet H, $CH_3$ oder Cl
- das Symbol A einen zweiwertigen Rest bedeutet, ausgewählt in der Gruppe bestehend aus den Resten: Cyclohexylene, Phenylene, 4-Methyl-1,3-phenylen, 2-Methyl-1,3-phenylen, 5-Methyl-1,3-phenylen, 2,5-Diethyl-3-methyl-1,4-phenylen und den Resten der Formel

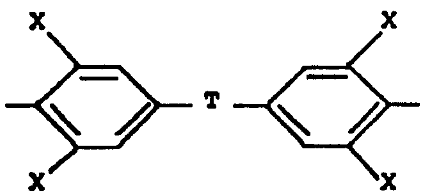

worin T eine einfache Wertigkeitsbindung oder eine Gruppe

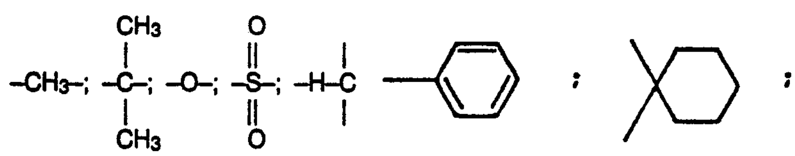

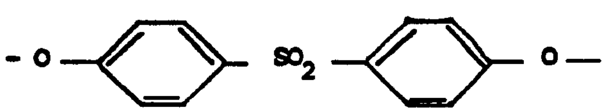

bedeutet und X ein Wasserstoffatom, einen Methyl-, Ethyl- oder Isopropyl-Rest darstellt;

(b) mindestens ein biprimäres Diamin der Formel

$H_2N–B–NH_2$ (II)

worin das Symbol B einen der zweiwertigen Reste darstellt, den das Symbol A bedeutet, wobei die Symbole A und B, die in demselben Polymeren enthalten sind, identisch oder untereinander verschieden sein können; und
(c) mindestens ein ungesättigtes copolymerisierbares Monomeres der Formel

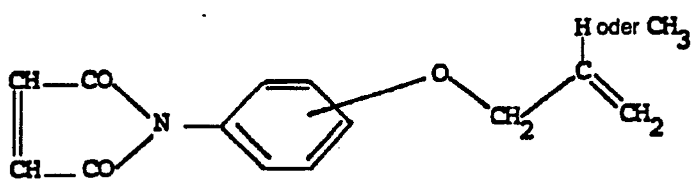

(III)

worin der Allyloxy- oder Methallyloxy-Rest in ortho-, meta- oder para-Stellung in bezug auf das Kohlenstoffatom des Benzolrings, der mit dem Stickstoff verbunden ist, steht.

2. Verfahren zur Herstellung der Polymeren mit Imidgruppen, die sich in Form von wärmehärtbaren Prepolymeren (P) löslich in den polaren organischen Lösungsmitteln befinden und einen Erweichungspunkt bei einer Temperatur unterhalb 200°C aufweisen, dadurch gekennzeichnet, daß man das Gemisch der Reaktanten (a), (b) und gegebenenfalls (c), wie sie vorstehend in Anspruch 1 definiert sind, auf eine Temperatur zwischen 50°C und 180°C bis zur Erzielung eines flüssigen oder pastösen homogenen Produkts direkt erhitzt.

3. Verfahren gemäß Anspruch 1, dadurch gekennzeichnet, daß es darin besteht, das Gemisch der Reaktanten zwischen 50°C und 180°C zu erhitzen, um zunächst ein Prepolymeres (P) zu bilden, dann das Härten des Prepolymeren (P) durch Erhitzen auf ein Temperatur zwischen 150°C und 250°C zu bewirken.

4. Verfahren gemäß Anspruch 2 oder 3, dadurch gekennzeichnet, daß es darin besteht, aus dem oder den Bis-imid(en) (a) und dem Diamin(en) (b) ein Prepolymeres (PP) zu bilden, dann dieses Prepolymere (PP) mit dem oder den Monomer(en) (c) zu erhitzen, um das Prepolymere (P) zu erhalten.

5. Verfahren gemäß Anspruch 2 oder 3, dadurch gekennzeichnet, daß es darin besteht, ausgehend von dem oder den Diamin(en) (b) und dem oder den Monomer(en) (c) ein Prepolymeres (P'P') zu bilden, dann dieses Prepolymere (P'P') mit dem oder den Bis-imid(en) (a) zu erhitzen, um das Prepolymere (P) zu erhalten.

6. Verfahren gemäß einem der Ansprüche 1 bis 5, dadurch gekennzeichnet, daß die Mengen an N,N'-Bis-imid(en) (a), Diamin(en) (b) und Monomer(en) (c) derart ausgewählt sind, daß:

- einerseits das Verhältnis $r_1$:

$$\frac{\text{Gesamtzahl der Mole Bis-imid(e) (a) und Monomer(e) (c)}}{\text{Zahl der Mole Diamin(e) (b)}}$$

sich in dem Intervall von 1,2/1 bis 10/1 und vorzugsweise von 2/1 bis 5/1 befindet,
- und andererseits die Anzahl der Imidgruppen, die von dem oder den Monomer(en) (c) erbracht werden, bis zu 50 % der Gesamtzahl der Imidgruppen, erbracht von den Reaktanten (a) + (c), darstellt und vorzugsweise in dem Intervall von 10 bis 35 % liegt.

7. Verfahren gemäß einem der Ansprüche 1 bis 3, dadurch gekennzeichnet, daß man neben den Reaktanten (a), (b) und (c) vor dem Beginn des Erhitzens einen Katalysator einführt, ausgewählt aus der Gruppe der Mono- oder Polysauerstoffsäuren mineralischen oder organischen Ursprungs, wovon wenigstens eine der Säurefunktionen eine Ionisationskonstante in Wasser bei 25°C, pka, unterhalb 5 besitzt; wobei dieser Katalysator in einer Menge von 0,1 bis 5 % in bezug auf das Gesamtgewicht der eingesetzten Reaktanten verwendet wird.

8. Verfahren gemäß Anspruch 4 oder 5, dadurch gekennzeichnet, daß man in das Herstellungsmilieu des Prepolymeren (PP) oder (P'P') vor dem Beginn des Erhitzens einen Katalysator einführt, dessen Natur und Menge denjenigen, wie vorstehend in Anspruch 7 definiert, entspricht.

9. Verwendung der gemäß einem der Ansprüche 1 bis 8 hergestellten Polymeren zur Erzeugung von geformten Gegenständen, Überzügen, Schichtstoffen und Erzeugnissen mit Zellstruktur.

**Patentansprüche** für den Vertragsstaat: ES

1. Verfahren zur Herstellung von Polymeren mit Imidgruppen, die sich in Form von gehärteten, in den üblichen Lösungsmitteln unlöslichen Polymeren befinden und keine merkliche Erweichung unterhalb der Temperatur, bei der sie sich abzubauen beginnen, zeigen, dadurch gekennzeichnet, daß man bei einer Temperatur zwischen 50°C und 250°C das Gemisch der folgenden Reaktanten direkt erhitzt.

(a) mindestens ein N,N'-Bis-imid der Formel

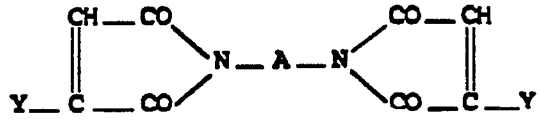

(I)

worin.

- das Symbol Y bedeutet H, $CH_3$ oder Cl
- das Symbol A einen zweiwertigen Rest bedeutet, ausgewählt aus der Gruppe bestehend aus den Resten: Cyclohexylene, Phenylene, 4-Methyl-1,3-phenylen, 2-Methyl-1,3-phenylen, 5-Methyl-1,3-phenylen, 2,5-Diethyl-3-methyl-1,4-phenylen und den Resten der Formel

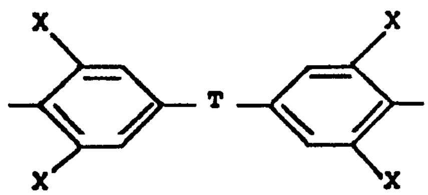

worin T eine einfache Wertigkeitsbindung oder eine Gruppe:

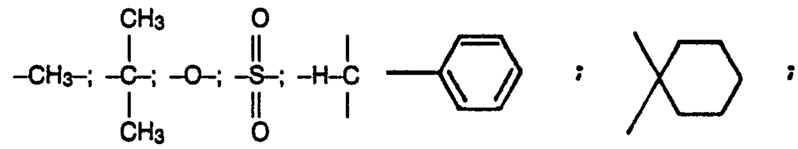

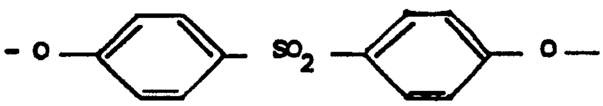

darstellt und X ein Wasserstoffatom, einen Methyl-, Ethyl- oder Isopropyl-Rest bedeutet;
(b) mindestens ein biprimäres Diamin der Formel

$H_2N{-}B{-}NH_2$ (II)

worin das Symbol B einen der zweiwertigen Reste darstellt, den das Symbol A bedeutet, wobei die Symbole A und B, die in demselben Polymeren enthalten sind, identisch oder untereinander verschieden sein können; und
(c) mindestens ein ungesättigtes, copolymerisierbares Monomeres der Formel

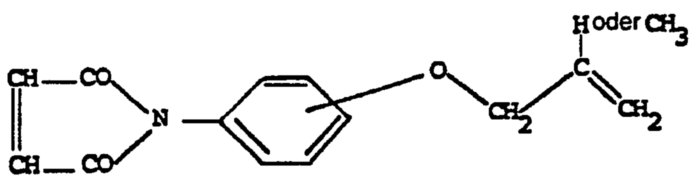

(III)

worin der Allyloxy- oder Methallyloxy-Rest in ortho-, meta- oder para-Stellung in bezug auf das Kohlenstoffatom des Benzolringes, der an den Stickstoff gebunden ist, steht.

2. Verfahren zur Herstellung der Polymeren mit Imidgruppen, die sich in Form von wärmehärtbaren Prepolymeren (P), löslich in den polaren organischen Lösungsmitteln, befinden und einen Erweichungspunkt bei einer Temperatur unterhalb von 200°C besitzen, dadurch gekennzeichnet, daß man das Gemisch der Reaktanten (a), (b) und gegebenenfalls (c), wie sie vorstehend in Anspruch 1 definiert sind, direkt auf eine Temperatur zwischen 50°C und 180°C erhitzt, bis zur Erzielung eines flüssigen oder pastösen homogenen Produkts.

3. Verfahren gemäß Anspruch 1, dadurch gekennzeichnet, daß es darin besteht, das Gemisch der Reaktanten zwischen 50°C und 180°C zu erhitzen, um zunächst ein Prepolymeres (P) zu bilden, dann das Härten des Prepolymeren (P) durch Erhitzen auf eine Temperatur zwischen 150°C und 250°C zu bewirken.

4. Verfahren gemäß Anspruch 2 oder 3, dadurch gekennzeichnet, daß es darin besteht, ausgehend von dem oder den Bis-imid(en) (a) und Diamin(en) (b) ein Prepolymers (PP) zu bilden, dann dieses Prepolymere (PP) mit dem oder den Monomer(en) (c) zu erhitzen, um das Prepolymer (P) zu erhalten.

5. Verfahren gemäß Anspruch 2 oder 3, dadurch gekennzeichnet, daß es darin besteht, ausgehend von dem oder den Diamin(en) (b) und dem oder den Monomer(en) (c) ein Prepolymeres (P'P') zu bilden, dann dieses Prepolymere (P'P') mit dem oder den Bis-imid(en) (a) zu erhitzen, um das Prepolymere (P) zu erhalten.

6. Verfahren gemäß einem der Ansprüche 1 bis 5, dadurch gekennzeichnet, daß die Mengen an N,N'-Bis-imid(en) (a), Diamin(en) (b) und Monomer(en) (c) derart ausgewählt sind, daß:

- einerseits das Verhältnis $r_1$:

$$\frac{\text{Gesamtzahl der Mole Bis-imid(e) (a) und Monomer(e) (c)}}{\text{Zahl der Mole Diamin(e) (b)}}$$

in dem Intervall von 1,2/1 bis 10/1 und vorzugsweise von 2/1 bis 5/1 liegt,
- und andererseits die Zahl der Imidgruppen, die von dem oder den Monomer(en) (c) erbracht werden, bis zu 50 % der Gesamtzahl der Imidgruppen, erbracht durch die Reaktanten (a) + (c), darstellt und vorzugsweise in dem Bereich von 10 bis 35 % liegt

7. Verfahren gemäß einem der Ansprüche 1 bis 3, dadurch gekennzeichnet, daß man neben den Reaktanten (a), (b) und (c) vor dem Beginn des Erhitzens einen Katalysator einführt, ausgewählt aus der Gruppe der Mono- oder Polysauerstoffsäuren mineralischen oder organischen Ursprungs, wovon mindestens eine der Säurefunktionen eine Ionisationskonstante in Wasser bei 25°C, pka, unterhalb 5 besitzt; wobei dieser Katalysator in einer Menge von 0,1 bis 5 % in bezug auf das Gesamtgewicht der eingesetzten Reaktanten verwendet wird.

8. Verfahren gemäß Anspruch 4 oder 5, dadurch gekennzeichnet, daß man in das Herstellungsmilieu des Prepolymeren (PP) oder (P'P') vor Beginn des Erhitzens einen Katalysator einführt, dessen Natur und Menge diejenigen sind, wie sie vorstehend in Anspruch 7 definiert sind.

9. Verwendung der gemäß einem der Ansprüche 1 bis 8 hergestellen Polymeren zur Erzeugung von geformten Gegenständen, Überzügen, Schichtstoffen und Erzeugnissen mit Zellstruktur.

**Claims** for the Contracting States: BE, CH, DE, FR, GB, IT, LI, LU, NL, SE

1. Polymers containing imide groups, characterized in that they comprise the product of reaction between:

(a) at least one N,N'-bisimide of formula:

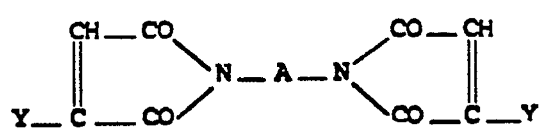

(I)

in which:

- the symbol Y denotes H, $CH_3$ or Cl
- the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

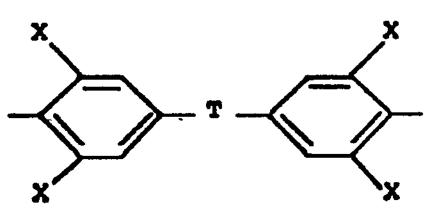

in which T denotes a single valency bond or a group:

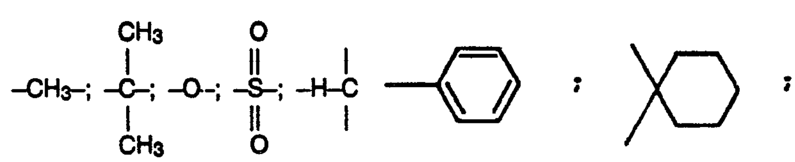

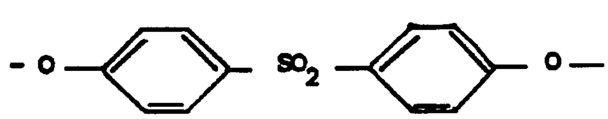

and X denotes a hydrogen atom or a methyl, ethyl or isopropyl radical;

(b) at least one diprimary diamine of formula:

$H_2N-B-NH_2$ (II)

in which the symbol B denotes one of the divalent radicals denoted by the symbol A, it being possible for the symbols A and B present in one and the same polymer to be identical or different from each other; and
(c) at least one copolymerizable unsaturated monomer of formula:

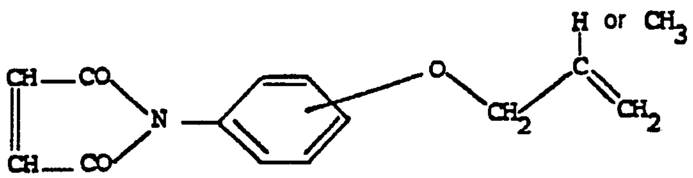

(III)

in which the allyloxy or methallyloxy radical is in an ortho, meta or para position in relation to the benzene ring carbon atom bonded to the nitrogen.

2. Polymers according to Claim 1, characterized in that the quantities of N,N'-bisimide(s) (a), of diamine(s) (b) and of monomer(s) (c) are chosen so that:

on the one hand, the ratio $r_1$:

$$\frac{\text{total number of moles of bisimide(s) (a) and of monomer(s) (c)}}{\text{number of moles of diamine(s) (b)}}$$

is situated in the range from 1.2/1 to 10/1 and preferably from 2/1 to 5/1,
and, on the other hand, the number of imide groups contributed by the monomer(s) (c) represents up to 50 % of the total number of imide groups contributed by the reactants (a) + (c) and is preferably situated in the range from 10 to 35 %.

3. Polymers according to either of Claims 1 and 2, characterized in that they are in the form of cured polymers, insoluble in the usual solvents and exhibiting no appreciable softening below the temperature at which they begin to decompose.

4. Polymers according to either of Claims 1 and 2, characterized in that they are in the form of heat-curable prepolymers (P) soluble in polar organic solvents and have a softening point at a temperature below 200°C.

5. Process for the preparation of cured polymers according to Claims 1, 2 and 3, characterized in that the mixture of the reactants is heated directly to a temperature of between 50° and 250°C.

6. Process according to Claim 5, characterized in that it consists in heating the mixture of reactants between 50°C and 180°C to form a prepolymer (P) in a first step, and in then causing the prepolymer (P) to be cured by heating at a temperature between 150°C and 250°C.

7. Process for the preparation of thermosetting polymers (P) according to Claims 1, 2 and 4, characterized in that the mixture of reactants is heated directly to a temperature of between 50°C and 180°C until a homogeneous liquid or pasty product is obtained.

8. Process according to Claim 6 or 7, characterized in that it consists in forming a prepolymer (PP) from the bisimide(s) (a) and the diamine(s) (b), and then heating this prepolymer (PP) with the monomer(s) (c) to obtain the prepolymer (P).

9. Process according to Claim 6 or 7, characterized in that it consists in forming a prepolymer (P'P') from the diamine(s) (b) and from the monomer(s) (c), and then heating this prepolymer (P'P') with the bisimide(s) (a) to obtain the prepolymer (P).

10. Process according to any one of Claims 5 to 7, characterized in that there is introduced, accompanying the reactants (a), (b) and (c) and before the heating commences, a catalyst chosen from the group of oxygen-containing mono- or polyacids of inorganic or organic origin in which at least one of the acid functions has an ionization constant $HpK_a$ in water at 25°C of less than 5, the said catalyst being employed in a quantity representing 0.1 to 5 % based on the total weight of the reactants introduced.

11. Process according to Claim 8 or 9, characterized in that a catalyst whose nature and quantity are those defined above in Claim 10 is introduced into the mixture used to prepare the prepolymer (PP) or (P'P') before the heating commences.

12. Application of the polymers according to any one 5 of Claims 1 to 4 to the manufacture of moulded articles, coatings, laminates and articles of cellular structure.

**Claims** for the Contracting State: AT

1. Process for the preparation of polymers containing imide groups, which are in the form of cured polymers, insoluble in the usual solvents and exhibiting no appreciable softening below the temperature at which they begin to decompose, characterized in that a mixture of the following reactants is heated directly to a temperature of between 50°C and 250°C:

(a) at least one N,N'-bisimide of formula:

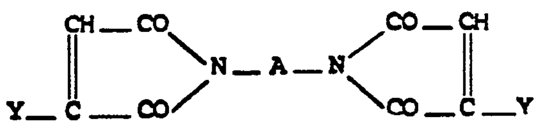

(I)

in which:

- the symbol Y denotes H, $CH_3$ or Cl
- the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

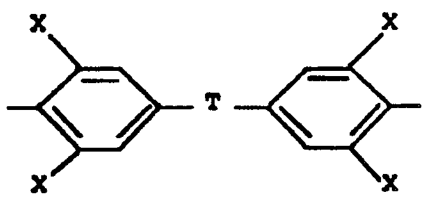

in which T denotes a single valency bond or a group:

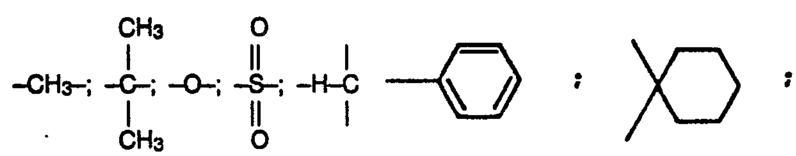

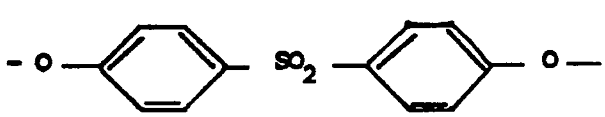

and X denotes a hydrogen atom or a methyl, ethyl or isopropyl radical;
(b) at least one diprimary diamine of formula:

$H_2N-B-NH_2$ (II)

in which the symbol B denotes one of the divalent radicals denoted by the symbol A, it being possible for the symbols A and B present in one and the same polymer to be identical or different from each other; and
(c) at least one copolymerizable unsaturated monomer of formula:

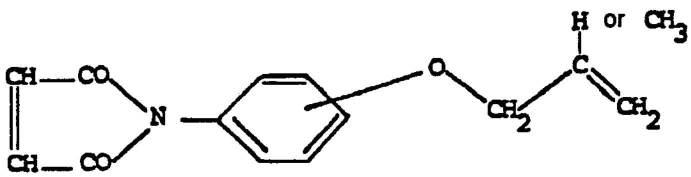

(III)

in which the allyloxy or methallyloxy radical is in an ortho, meta or para position in relation to the benzene ring carbon atom bonded to the nitrogen.

2. Process for the preparation of polymers containing imide groups, which are in the form of heat-curable prepolymers (P) soluble in polar organic solvents and exhibiting a softening point at a temperature below 200°C, characterized in that the mixture of the reactants (a), (b) and optionally (c) which are defined above in Claim 1 is heated directly to a temperature of between 50°C and 180°C until a homogenous liquid or pasty product is obtained.

3. Process according to Claim 1, characterized in that it consists in heating the mixture of reactants between 50°C and 180°C to form a prepolymer (P) in a first step, and in then causing the prepolymer (P) to be cured by heating at a temperature between 150°C and 250°C.

4. Process according to Claim 2 or 3, characterized in that it consists in forming a prepolymer (PP) from the bisimide(s) (a) and the diamine(s) (b), and then heating this prepolymer (PP) with the monomer(s) (c) to obtain the prepolymer (P).

5. Process according to Claim 2 or 3, characterized in that it consists in forming a prepolymer (P'P') from the diamine(s) (b) and from the monomer(s) (c), and then heating this prepolymer (P'P') with the bisimide(s) (a) to obtain the prepolymer (P).

6. Process according to any one of Claims 1 to 5, characterized in that the quantities of N,N'-bisimide(s) (a), of diamine(s) (b) and of monomer(s) (c) are chosen so that:
on the one hand, the ratio $r_1$:

$$\frac{\text{total number of moles of bisimide(s) (a) and of monomer(s) (c)}}{\text{number of moles of diamine(s) (b)}}$$

is situated in the range from 1.2/1 to 10/1 and preferably from 2/1 to 5/1,
and, on the other hand, the number of imide groups contributed by the monomer(s) (c) represents up to 50 % of the total number of imide groups contributed by the reactants (a) + (c) and is preferably situated in the range from 10 to 35 %.

7. Process according to any one of Claims 1 to 3, characterized in that there is introduced, accompanying the reactants (a), (b) and (c) and before the heating commences, a catalyst chosen from the group of oxygen-containing mono- or polyacids of inorganic or organic origin in which at least one of the acid functions has an ionization constant $pK_a$ in water at 25°C of less than 5, the said catalyst being employed in a quantity representing 0.1 to 5 % based on the total weight of the reactants introduced.

8. Process according to Claim 4 or 5, characterized in that a catalyst whose nature and quantity are those defined above in Claim 7 is introduced into the mixture used to prepare the prepolymer (PP) or (P'P') before the heating commences.

9. Application of the polymers prepared according to any one of Claims 1 to 8 to the manufacture of moulded articles, coatings, laminates and articles of cellular structure.

**Claims** for the Contracting State: ES

1. Process for the preparation of polymers containing imide groups, which are in the form of cured polymers, insoluble in the usual solvents and exhibiting no appreciable softening below the temperature at which they begin to decompose, characterized in that a mixture of the following reactants is heated directly to a temperature of between 50°C and 250°C:

(a) at least one N,N'-bisimide of formula:

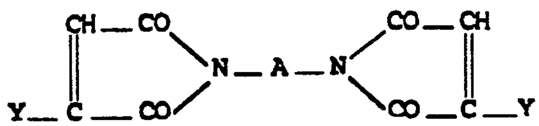

(I)

in which:

- the symbol Y denotes H, $CH_3$ or Cl
- the symbol A denotes a divalent radical chosen from the group consisting of the following radicals: cyclohexylenes, phenylenes, 4-methyl-1,3-phenylene, 2-methyl-1,3-phenylene, 5-methyl-1,3-phenylene, 2,5-diethyl-3-methyl-1,4-phenylene, and the radicals of formula:

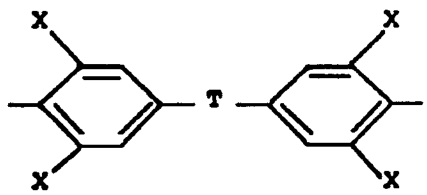

in which T denotes a single valency bond or a group:

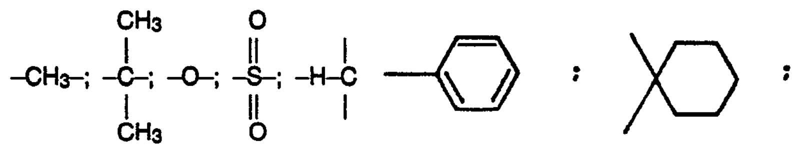

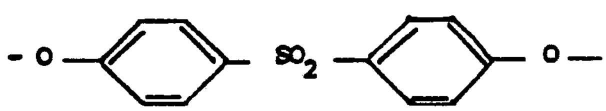

and X denotes a hydrogen atom or a methyl, ethyl or isopropyl radical;
(b) at least one diprimary diamine of formula:

$H_2N–B–NH_2$ (II)

in which the symbol B denotes one of the divalent radicals denoted by the symbol A, it being possible for the symbols A and B present in one and the same polymer to be identical or different from each other; and
(c) at least one copolymerizable unsaturated monomer of formula:

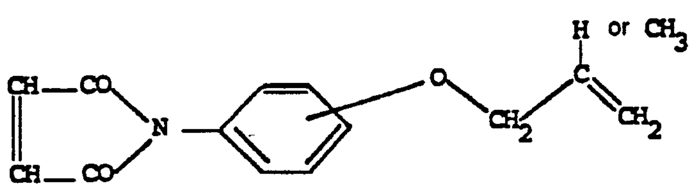

(III)

in which the allyloxy or methallyloxy radical is in an ortho, meta or para position in relation to the benzene ring carbon atom bonded to the nitrogen.

2. Process for the preparation of polymers containing imide groups, which are in the form of heat-curable prepolymers (P) soluble in polar organic solvents and exhibiting a softening point at a temperature below 200°C, characterized in that the mixture of the reactants (a), (b) and optionally (c) which are defined above in Claim 1 is heated directly to a temperature of between 50°C and 180°C until a homogenous liquid or pasty product is obtained.

3. Process according to Claim 1, characterized in that it consists in heating the mixture of reactants between 50°C and

180°C to form a prepolymer (P) in a first step, and in then causing the prepolymer (P) to be cured by heating at a temperature between 150°C and 250°C.

4. Process according to Claim 2 or 3, characterized in that it consists in forming a prepolymer (PP) from the bisimide(s) (a) and the diamine(s) (b), and then heating this prepolymer (PP) with the monomer(s) (c) to obtain the prepolymer (P).

5. Process according to Claim 2 or 3, characterized in that it consists in forming a prepolymer (P'P') from the diamine(s) (b) and from the monomer(s) (c), and then heating this prepolymer (P'P') with the bisimide(s) (a) to obtain the prepolymer (P).

6. Process according to any one of Claims 1 to 5, characterized in that the quantities of N,N'-bisimide(s) (a), of diamine(s) (b) and of monomer(s) (c) are chosen so that:
on the one hand, the ratio $r_1$:

$$\frac{\text{total number of moles of bisimide(s) (a) and of monomer(s) (c)}}{\text{number of moles of diamine(s) (b)}}$$

is situated in the range from 1.2/1 to 10/1 and preferably from 2/1 to 5/1,
and, on the other hand, the number of imide groups contributed by the monomer(s) (c) represents up to 50 % of the total number of imide groups contributed by the reactants (a) + (c) and is preferably situated in the range from 10 to 35 %.

7. Process according to any one of Claims 1 to 3, characterized in that there is introduced, accompanying the reactants (a), (b) and (c) and before the heating commences, a catalyst chosen from the group of oxygen-containing mono- or polyacids of inorganic or organic origin in which at least one of the acid functions has an ionization constant $pK_a$ in water at 25°C of less than 5, the said catalyst being employed in a quantity representing 0.1 to 5 % based on the total weight of the reactants introduced.

8. Process according to Claim 4 or 5, characterized in that a catalyst whose nature and quantity are those defined above in Claim 7 is introduced into the mixture used to prepare the prepolymer (PP) or (P'P') before the heating commences.

9. Application of the polymers prepared according to any one of Claims 1 to 8 to the manufacture of moulded articles, coatings, laminates and articles of cellular structure.